# EUROPEAN PATENT APPLICATION

(11) **EP 4 588 538 A1**
(43) Date of publication of application: **23.07.2025**
(21) Application number: 23865320.8
(22) Date of filing: 31.08.2023
(51) Int. Cl.: A63B 71/06, A63B 69/00, G06T 7/20

(54) **INFORMATION PROCESSING DEVICE, INFORMATION PROCESSING METHOD, AND INFORMATION ANALYSIS SYSTEM**

(30) Priority: 15.09.2022 JP 2022146897
(71) Applicant: Sony Group Corporation, Tokyo 108-0075 (JP)
(72) Inventor: AKAMA, Ayako, Tokyo 108-0075 (JP); TAKIMOTO, Ayako, Tokyo 108-0075 (JP)
(74) Representative: 2SPL Patentanwälte PartG mbB
(86) International application number: PCT/JP2023/031941
(87) International publication number: WO 2024/057965

(57) **Abstract**

An information processing device includes a calculation unit that performs processing of generating motion tendency information indicating a motion tendency with respect to a specific motion that is a human action.

## Description

### TECHNICAL FIELD

The present technology relates to an information processing device, an information processing method, and an information analysis system, and relates to a technical field of performing analysis processing of a specific motion in sports or the like.

### BACKGROUND ART

In recent years, various types of analysis have been performed on the play of sports players such as baseball, softball, soccer, and basketball, and the analysis has been utilized for practice and game strategy. For example, a GPS receiver is attached to a uniform or the like of a player to measure a running distance of the player during a game, so that an exercise load of the player can be obtained.

Furthermore, Patent Document 1 below discloses a technique with which a target moving image and a comparative moving image can be selected from among a plurality of moving images obtained by capturing images of a motion of a person who performs a ball game, and a skill level of the motion, improvement points in mechanics, and the like can be easily grasped.

### CITATION LIST

### PATENT DOCUMENT

Patent Document 1: Japanese Patent Application Laid-Open No. 2021-145702 A

### SUMMARY OF THE INVENTION

### PROBLEMS TO BE SOLVED BY THE INVENTION

For example, various motions of a sports player have been video-recorded and the video has been watched repeatedly to analyze the states of the motions, but there is a case where it is difficult to recognize motions of various parts of the body only by a recorded moving image. For example, in a pitching motion of a baseball pitcher, it is difficult to understand a relationship between a pitching form and a ball type as a pitching result only by viewing an actual moving image.

Therefore, an object of the present disclosure is to be able to provide useful information for predicting a specific motion and a result thereof.

### SOLUTIONS TO PROBLEMS

An information processing device according to the present technology includes a calculation unit that performs processing of generating motion tendency information indicating a motion tendency with respect to a specific motion that is a human action.

The specific motion is assumed to be a motion observed as one division in sports. For example, it is a pitching motion of baseball, a penalty kicking motion of soccer, or the like. The motion tendency information indicating the motion tendency is, for example, a motion tendency of each person with respect to the specific motion, for example, information of motion including what is observed as a habit of motion, or information indicating the motion tendency itself. For example, there are an artificial intelligence (AI) model that has learned a pitching motion of a certain pitcher, an important movement in a specific motion determined from the AI model, for example, information on a position of a specific part of a body at a certain timing, and the like.

### BRIEF DESCRIPTION OF DRAWINGS

Fig. 1 is an explanatory diagram of an information analysis system according to an embodiment of the present technology.
Fig. 2 is a block diagram of the information analysis system according to the embodiment.
Fig. 3 is a block diagram of an information processing device constituting the information analysis system according to the embodiment.
Fig. 4 is an explanatory diagram of a tendency presentation screen according to the first embodiment.
Fig. 5 is an explanatory diagram of an important motion model and a feature amount graph according to the first embodiment.
Fig. 6 is an explanatory diagram of another example of the important motion model and the feature amount graph according to the first embodiment.
Fig. 7 is an explanatory diagram of prediction accuracy and a time-series change graph according to the first embodiment.
Fig. 8 is an explanatory diagram of a computer graphics (CG) model on the tendency presentation screen according to the first embodiment.
Fig. 9 is an explanatory diagram of highlight on a tendency presentation screen according to the first embodiment.
Fig. 10 is a flowchart of processing in a data accumulation stage according to the first embodiment.
Fig. 11 is a flowchart of processing in a data display stage according to the first embodiment.
Fig. 12 is an explanatory diagram of a training screen according to a second embodiment.
Fig. 13 is an explanatory diagram of start of playback of a pitching video according to the second embodiment.
Fig. 14 is an explanatory diagram of answer timing according to the second embodiment.
Fig. 15 is an explanatory diagram after answer according to the second embodiment.
Fig. 16 is an explanatory diagram of a training screen of a viewpoint of an umpire according to the second embodiment.
Fig. 17 is a flowchart of processing in a data accumulation stage according to the second embodiment.
Fig. 18 is a flowchart of processing in a data display stage according to the second embodiment.

### MODE FOR CARRYING OUT THE INVENTION

Hereinafter, embodiments will be described in the following order.
<1. Configuration of Information Analysis System>
<2. First Embodiment: Processing of Tendency Presentation Screen>
<3. Second Embodiment: Processing of Training Screen>
<4. Summary and Modification>

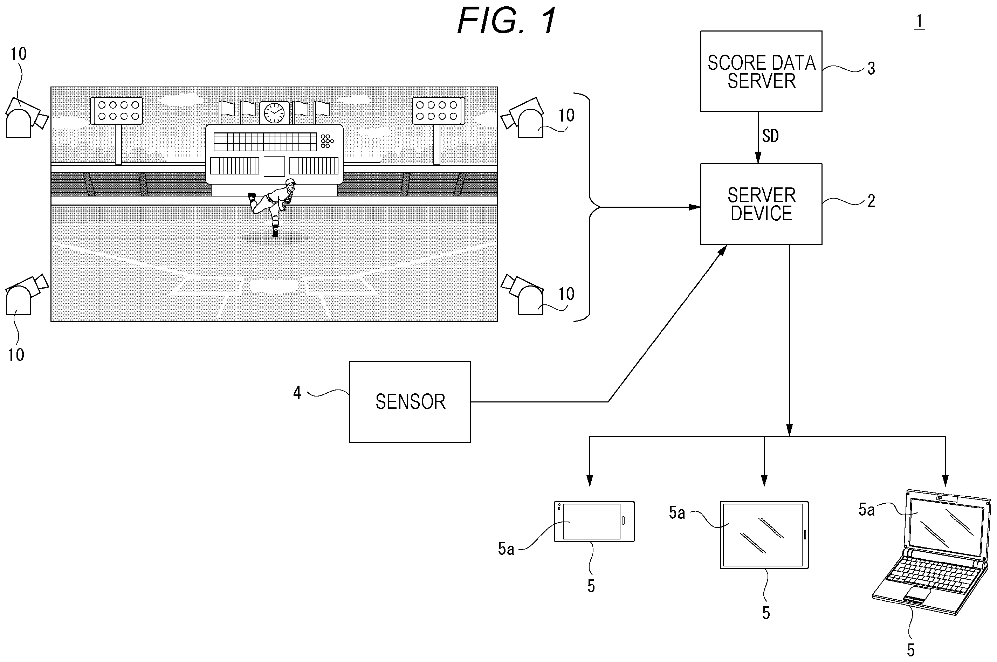

Note that, in the present disclosure, "images" include both moving images and still images. For example, it is assumed that imaging devices 10 illustrated in Fig. 1 mainly capture a moving image, but for example, an image displayed on the terminal device 5 may be a moving image or a still image. Furthermore, the "image" refers to an image actually displayed on a screen, but the "image" in a signal processing process or a transmission path until being displayed on the screen refer to image data.

### <1. Configuration of Information Analysis System>

Fig. 1 illustrates an outline of an information analysis system 1 according to an embodiment.

The information analysis system 1 of Fig. 1 includes imaging devices 10, a server device 2, a score data server 3, a sensor 4, and terminal devices 5. These components are connected to one another via wired communication, wireless communication, network communication, or the like.

For example, a plurality of imaging devices 10 images an area of a subject in a stadium such as a baseball stadium, for example, situations of a game, from various positions. Note that, although the plurality of imaging devices 10 is illustrated, it is sufficient if at least one imaging device 10 is provided.

In the present embodiment, an example of analyzing pitching of a pitcher in baseball or softball will be described. Accordingly, the imaging devices 10 are arranged to image at least the position of the pitcher, that is, an area including the mound.

Then, in the information analysis system 1, capture data of a subject such as a pitcher is extracted from the captured images of the imaging devices 10, and information regarding the pitching motion can be presented on the basis of the capture data. The capture data is capture data (skeleton capture data) of a skeleton of the subject, capture data (expression capture data) of an expression of the subject, and capture data (item capture data) of an item (bat, glove, or the like) held by the subject. Here, the item capture data indicates the position (mounted position or set position) and angle of the bat held by the subject, the position and angle of the glove worn by the subject, the degree of opening (the degree of opening of the little finger portion and the thumb portion), and the like. That is, the information analysis system 1 can present information regarding the pitching motion on the basis of at least one of the skeleton capture data, the expression capture data, or the item capture data. In the present embodiment, as an example, a case where information regarding a pitching motion is presented on the basis of the skeleton capture data will be described.

During these years, with regard to plays in sports such as soccer and basketball, a technique for estimating postures and positions of players and umpires, a position and rotation of a ball, and the like from a designated field from images captured by dedicated cameras and information obtained by sensors (acceleration sensors and GPS sensors) attached to persons (players) and an object (ball) involved in the competition is known as Electronic Performance and Tracking Systems (EPTS).

Specifically, the imaging devices 10 capture images for obtaining EPTS data including the skeleton capture data of a player, tracking data indicating a trajectory of a ball, and the like.

Furthermore, the images captured by the imaging devices 10 can also be used as real images of a match or the like.

EPTS data generated on the basis of images captured by the imaging devices 10 is transmitted to the server device 2. For example, in a case where an information processing device (not illustrated) that records images captured by the plurality of imaging devices 10 and generates the EPTS data on a stadium side such as a baseball stadium is provided, the EPTS data generated by the information processing device is transmitted to the server device 2.

Alternatively, captured images obtained by the imaging devices 10 may be transmitted to the server device 2, and the server device 2 may generate EPTS data.

The sensor 4 is a sensor that detects motions of a player, a ball, and the like. Specifically, a sensor attached to a player or a ball, such as the acceleration sensor or the GPS sensor described above, is assumed. Information of motions of the player can also be obtained from information detected by the sensor 4. Alternatively, the information of the sensor 4 can be used supplementally when the skeleton capture data is obtained or a posture or the like is estimated from an image. The detection information of the sensor 4 can also be used for the speed, rotation speed, trajectory, and the like of the ball.

The detection information of the sensor 4 may be transmitted to the server device 2, or may be input to the information processing device (not illustrated) that generates the EPTS data on a stadium side such as a baseball stadium.

The score data server 3 is, for example, an information processing device of an association that generates and distributes score data SD of baseball. Here, the score data server 3 is configured as a server device capable of transmitting the score data SD of a game to the server device 2.

The score data server 3 may sequentially transmit the score data SD to the server device 2 during the game, or may collectively transmit all the score data SD of the game after the game, for example.

In the case of baseball, the score data SD includes various types of information of a game as follows.

For example, the information includes information of the entire game such as a score for each inning of the game and information of a player, and information for each pitch of a pitcher. The score data includes, for each pitch, information of, for example, a pitching time, a pitcher's name, a batter's name, whether a batter is right-handed or left-handed, presence or absence of a runner on first base, second base, or third base, a runner's name, a strike/ball count, whether the pitch is a ball or a strike, an out count, a batting result (hit, swinging and miss, overlooking, foul, ground ball out, fly out, foul fly, or the like), a ball speed, a type of pitch, a rotation speed, a rotation axis, a course, and various types of other information.

The terminal device 5 is, for example, an information processing device such as a smartphone, a tablet terminal, or a personal computer, and as the terminal device 5, for example, a device used by a person related to a baseball team such as a player or an analyst of the baseball team is assumed. Then, the terminal device 5 is a device that presents an image obtained by analyzing the motion of each player, an image for training, and the like to a player, an analyst, and the like. An image provided by the server device 2 is displayed on the display unit 5a of the terminal device 5.

The server device 2 performs various processes for presenting the analysis information in the terminal device 5. For example, an analysis result based on the skeleton capture data of a subject generated from an image captured by the imaging devices 10 is displayed.

Specifically, the server device 2 causes the terminal device 5 to display tendency information in the pitching motion of the pitcher. The information on the tendency of the pitching motion includes, for example, information indicating the tendency (difference) of the pitching motion for each type of ball such as fast ball, curve, and fork ball as the pitching result. The tendency of the pitching motion includes what is generally called a habit of pitching motion of a pitcher. Processing of displaying such information on the tendency of the pitching motion will be described later as a first embodiment.

Furthermore, the server device 2 performs various types of processing for image presentation for training of the user using the terminal device 5. For example, the processing is so that a CG image of the pitching motion is generated on the basis of the skeleton capture data of the subject generated from the images captured by the imaging devices 10, and is presented to the user to answer the ball type. Processing of displaying such an image for training will be described later as a second embodiment.

As the server device 2, an information processing device that performs cloud computing, that is, a cloud server is assumed.

However, the processing for causing the terminal device 5 to display an image of an analysis result and an image for training may be performed by an information processing device other than the cloud server. For example, it is also conceivable that an information processing device such as a personal computer installed in a game venue has a function as the server device 2 and performs acquisition of the skeleton capture data, processing of generating a comparison image, and the like. Moreover, it is also conceivable that the terminal device 5 also has a function as the server device 2, and performs processing of acquiring the skeleton capture data and generating an image of an analysis result or an image for training.

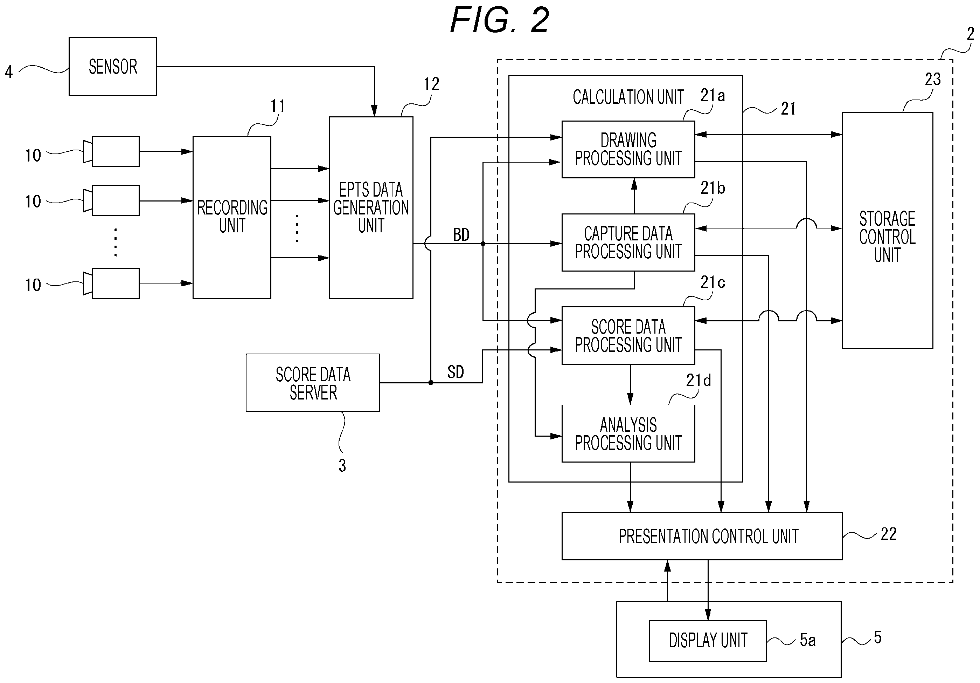

Fig. 2 illustrates an example of a functional configuration of the server device 2 and an input/output system related to the server device 2 in the information analysis system 1 of Fig. 1 described above.

The imaging devices 10 are configured as digital camera devices including an imaging element such as a charge coupled device (CCD) sensor or a complementary metal-oxide-semiconductor (CMOS) sensor, for example, and obtain a captured image as digital data. In this example, each imaging device 10 obtains a captured image as a moving image.

As described with reference to Fig. 1, each of the imaging devices 10 images the situations of a game in a baseball stadium, in particular, at least the pitching motion of a pitcher, and is disposed at a predetermined position. The number of imaging devices 10 is one or more and is not particularly specified, but it is advantageous for the purpose of generating accurate EPTS data that the number is as large as possible.

Each of the imaging devices 10 captures a moving image in a synchronized state, and outputs the captured image.

A recording unit 11 records each of the images captured by a plurality of the imaging devices 10 and supplies each captured image to an EPTS data generation unit 12.

The EPTS data generation unit 12 performs analysis processing on one or a plurality of captured images to generate EPTS data individually, integrates all the individual EPTS data to generate the EPTS data as a whole. The EPTS data includes, for example, positions of players (pitcher, fielder, batter, or runner) or the ball at each frame timing, skeleton capture data of the players, postures of the players based on the skeleton capture data, information of a rotation speed and a rotation direction of the ball, and the like.

Furthermore, the EPTS data generation unit 12 may generate the EPTS data by using not only the captured image but also information obtained by the sensor 4, that may be, for example, information from an acceleration sensor embedded in a ball or a GPS sensor attached to a uniform of the player.

The EPTS data generation unit 12 can generate, as the EPTS data of the entire game, for example, information for determining the pitching motion or speed or trajectory of a ball for each of all pitches of a pitcher during a game.

The EPTS data generation unit 12 can generate the EPTS data from a plurality of captured images obtained by a plurality of imaging devices 10, and can also generate the EPTS data from a plurality of captured images obtained by one imaging device 10. Moreover, the EPTS data generation unit 12 can also generate the EPTS data from a plurality of images and information of one or a plurality of sensors, or can also generate the EPTS data from one captured image and information from one sensor.

The EPTS data generated by the EPTS data generation unit 12 is transmitted to the server device 2. The EPTS data includes skeleton capture data BD and tracking data indicating a trajectory, rotation, and the like of an object (ball, bat, racket, or the like) used in the competition.

Note that image data captured by the imaging device 10 may also be transmitted to the server device 2 via the EPTS data generation unit 12, for example.

The EPTS data generation unit 12 may be provided in the server device 2. For example, in this case, images captured by the imaging devices 10 and the detection information of the sensor 4 are only required to be transmitted to the EPTS data generation unit 12 in the server device 2 via network communication or the like.

Furthermore, as described with reference to Fig. 1, the score data SD is sequentially transmitted from the score data server 3 to the server device 2.

The server device 2 includes an information processing device such as a computer device, and is provided, by software, for example, with functions as a calculation unit 21, a presentation control unit 22, and a storage control unit 23.

The calculation unit 21 performs processing of generating motion tendency information indicating a motion tendency with respect to a specific motion that is a human action.

The specific motion is assumed to be a motion observed as one division in sports. For example, it is a pitching motion by a baseball pitcher, a motion of penalty kicking in soccer, or the like.

The motion tendency information indicating the motion tendency is, for example, motion information including a motion tendency (for example, a habit of motion) of each person with respect to the specific motion or information indicating the motion tendency itself.

Examples of the motion tendency information described in the embodiment include an AI model that has learned habits of each pitcher obtained by learning using the EPTS data (mainly skeleton capture data BD) and the score data SD, a feature amount that greatly contributes to a ball type in the AI model in prediction, and important movement information observed according to the ball type. The important motion information is, for example, information indicating a difference for each ball type as a position or a trajectory of a specific part of the body.

Furthermore, the calculation unit 21 performs processing of generating display information for user's perception training including a moving image of a specific motion and an operator with which a motion result of the specific motion indicated by the moving image is answered.

Accordingly, the calculation unit 21 has functions as a drawing processing unit 21a, a capture data processing unit 21b, a score data processing unit 21c, and an analysis processing unit 21d.

The capture data processing unit 21b performs processing of generating a CG image of a player or the like, time series information of a change in the skeleton according to a motion, and the like on the basis of the capture data such as the skeleton capture data BD.

The score data processing unit 21c performs processing related to the score data SD acquired from the score data server 3.

Specifically, processes such as management of the score data SD for each individual pitch, extraction of the score data SD for analysis of the pitching motion, and extraction of the score data SD for the display image are performed.

The drawing processing unit 21a performs processing of generating a skeleton animation or CG of the pitching form by merging the skeleton capture data BD and the score data SD.

The analysis processing unit 21d performs processing of generating an AI model for each pitcher and analyzing a habit of motion (pitching) using the AI model, and generating display information for displaying an analysis result.

For example, the analysis processing unit 21d generates motion tendency information on the basis of the skeleton capture data. For example, skeleton capture data for each pitch of a certain pitcher is learned to generate an AI model of the pitcher. Then, the analysis processing unit 21d determines a point (position, part, region, or the like) on the body that is a difference in motion for each ball type from the AI model, and also determines the presence or absence of a habit, an important movement regarded as a habit, and the like. Then, the analysis processing unit 21d generates display information for displaying the analysis results.

Note that the analysis processing unit 21d generates the AI model for each pitcher. For example, in a case where a certain pitcher is targeted, the AI model is generated and updated by learning the EPTS data and the score data SD of all pitches of the pitcher as inputs. Then, at each time point, a feature amount in the AI model is determined. The feature amount in this case can be said to be a variable suitable for predicting the difference in the pitching motion according to the ball type, for example.

The storage control unit 23 performs processing of storing the received skeleton capture data BD, score data SD, and the like in a storage medium. Furthermore, the storage control unit 23 performs processing of storing various types of data generated by the calculation unit 21 in the storage medium.

The presentation control unit 22 performs control to display various types of image information generated by the processing of the calculation unit 21 in a predetermined mode on the terminal device 5. Specifically, the presentation control unit 22 performs processing of displaying a skeleton image or CG generated by the calculation unit 21, an image indicating an analysis result, and the like on the terminal device 5.

Furthermore, in a case where the presentation control unit 22 presents a user interface (UI) image, processing of receiving operation information for the UI image by the user of the terminal device 5 is also performed.

The calculation unit 21, the presentation control unit 22, and the storage control unit 23 described above may be provided in one information processing device, or may be provided separately in a plurality of information processing devices.

An image generated by the server device 2 or data for image generation is transmitted to the terminal device 5 and displayed on the display unit 5a of the terminal device 5.

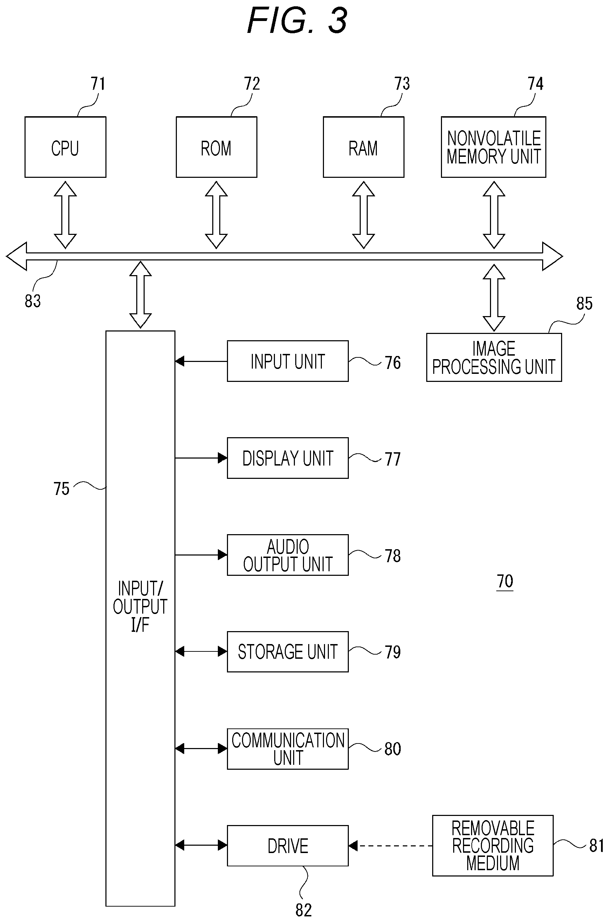

The configuration of the information processing device 70 used in the information analysis system 1 of Figs. 1 and 2 will be described. For example, the server device 2, the terminal devices 5, the EPTS data generation unit 12 in Fig. 2, and the like can be achieved by the information processing device 70 illustrated in Fig. 3.

Furthermore, the information processing device 70 may be implemented as, for example, a dedicated workstation, a general-purpose personal computer, a mobile terminal device, or the like.

A CPU 71 of the information processing device 70 illustrated in Fig. 3 performs various types of processing in accordance with a program stored in a ROM 72 or a nonvolatile memory unit 74 such as, for example, an electrically erasable programmable read-only memory (EEP-ROM), or a program loaded from a storage unit 79 to a RAM 73. In addition, the RAM 73 also stores, as appropriate, data and the like necessary for the CPU 71 to perform the various types of processing.

An image processing unit 85 is implemented as a processor that performs various types of image processing. For example, the processor is a processor capable of performing any of image generation processing of CG images and the like based on the skeleton capture data BD, image analysis processing of captured images and the like, generation processing of animation images and 3D images, data base (DB) processing, image effect processing, EPTS data generation processing, and the like.

The image processing unit 85 can be implemented by, for example, a CPU separate from the CPU 71, a graphics processing unit (GPU), general-purpose computing on graphics processing units (GPGPU), an artificial intelligence (AI) processor, or the like.

Note that the image processing unit 85 may be provided as a function in the CPU 71.

The CPU 71, the ROM 72, the RAM 73, the nonvolatile memory unit 74, and the image processing unit 85 are connected to one another via a bus 83. In addition, an input/output interface 75 is also connected to the bus 83.

An input unit 76 including an operator and an operation device is connected to the input/output interface 75. As the input unit 76, for example, one of various operators and operation devices including a keyboard, a mouse, a key, a dial, a touch panel, a touch pad, a remote controller, and the like is assumed.

A user operation is detected by the input unit 76, and a signal corresponding to an input operation is interpreted by the CPU 71.

Furthermore, a display unit 77 including a liquid crystal display (LCD), an organic electro-luminescence (EL) panel, and the like, and an audio output unit 78 including a speaker and the like are integrally or separately connected to the input/output interface 75.

The display unit 77 performs various types of display as a user interface. The display unit 77 is implemented as, for example, a display device provided in a housing of the information processing device 70, a separate display device connected to the information processing device 70, or the like.

The display unit 77 displays various images on a display screen on the basis of an instruction from the CPU 71. Furthermore, the display unit 77 displays various operation menus, icons, messages and the like, that is, displays as a graphical user interface (GUI) on the basis of an instruction from the CPU 71.

For example, in a case where the information processing device 70 is regarded as the terminal device 5, the display unit 77 displays a tendency presentation screen 30, a training screen 100, and the like to be described later.

In some cases, a storage unit 79 including a solid state drive (SSD), a hard disk drive (HDD), and the like, and a communication unit 80 including a modem and the like are connected to the input/output interface 75.

In a case where the information processing device 70 is regarded as the server device 2, for example, the storage unit 79 can be regarded as the storage medium used by the storage control unit 23 to store information.

The communication unit 80 performs communication processing via a transmission path such as the Internet, and performs wired/wireless communication with various devices and communication based on bus communication or the like.

In addition, to the input/output interface 75, as necessary, a drive 82 is connected, and a removable recording medium 81 such as a flash memory, a memory card, a magnetic disk, an optical disk, or a magnetooptical disk is appropriately mounted.

The drive 82 can read a data file such as an image file, various computer programs and the like from the removable recording medium 81. The read data file is stored in the storage unit 79, and images and sounds included in the data file are output by the display unit 77 and the audio output unit 78. Furthermore, the computer programs and the like read from the removable recording medium 81 are installed in the storage unit 79, as necessary.

In the information processing device 70, software can be installed through network communication by the communication unit 80 or the removable recording medium 81. Alternatively, the software may be stored in the ROM 72, the storage unit 79, or the like in advance.

For example, in a case where the information processing device 70 is regarded as the server device 2, functions as the calculation unit 21, the presentation control unit 22, and the storage control unit 23 described above are provided by software, and processing by these functions is performed by the CPU 71 and the image processing unit 85.

### <2. First Embodiment: Processing of Tendency Presentation Screen>

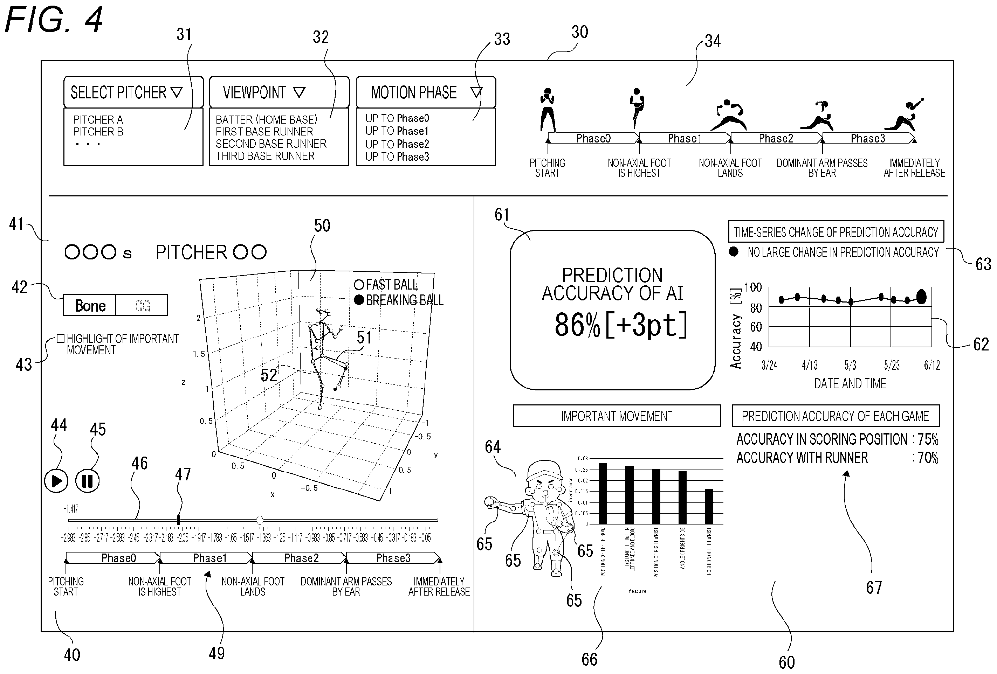

As a first embodiment, processing of the server device 2 that causes the terminal device 5 to display the tendency presentation screen 30 as illustrated in Fig. 4, for example, will be described.

In the case of baseball, the ability to predict a pitch type, a pitch course, and the like of the next pitch from a pitching motion, a pitching trajectory, and a game situation of the opposing pitcher is important for a player.

Currently, a habit of the pitching motion and a tendency of the pitching trajectory of the opponent pitcher are only analyzed in the brain by a person based on the experience and video when the batter stands at bat, and thus there is a large individual difference. In such a current situation, for example, if the tendency of the pitching motion is analyzed for each pitcher to generate the motion tendency information, and the display based on the motion tendency information can be provided, the team can tell the habit of the pitcher to each player, which is quite effective as a countermeasure for the game.

Accordingly, the server device 2 causes the terminal device 5 to present the tendency presentation screen 30 of Fig. 4 and provides information.

In the tendency presentation screen 30, first, a pitcher selection unit 31, a viewpoint selection unit 32, and a motion phase selection unit 33 are provided as settings for analysis processing.

The pitcher selection unit 31, the viewpoint selection unit 32, and the motion phase selection unit 33 are interfaces for setting a range of input data of learning in a case where the AI model is generated by learning data of pitching motions of a pitcher.

The pitcher selection unit 31 is, for example, a field that can be selected by each pitcher who is an opponent, and the user selects a pitcher to be analyzed from, for example, a pull-down item.

The viewpoint selection unit 32 is a field for selecting a viewpoint position for a pitching motion of a pitcher, and for example, the user selects, as the viewpoint position, a batter (home base), a right-handed batter, a left-handed batter, a first base runner, a second base runner, a third base runner, a referee, and the like from pull-down items. This is because the appearance of a pitching motion of a pitcher is different due to the difference in the viewpoint position.

The motion phase selection unit 33 is a field for selecting a period to be analyzed in a series of motions of the pitching motion.

The motion phase 34 is displayed in the vicinity of the motion phase selection unit 33, and the content of the phase to be selected is described. For example, a period from the start of pitching until the non-axial foot reaches the highest position is phase 0, a subsequent period until the non-axial foot lands is phase 1, a subsequent period until the elbow of the dominant arm passes by the ear is phase 2, and a subsequent period until immediately after release is phase 3.

The user can select the condition of the analysis period of "up to phase 0", "up to phase 1", "up to phase 2", and "up to phase 3" in the motion phase selection unit 33. For example, for a batter, a habit of the phase 2 or the phase 3 is difficult to deal with because the take-back of the swing is already started even if the habit is found, and is difficult to be used as a reference. It is desirable for a batter to find out the habit in phase 0. In a case where there is such a demand, "up to phase 0" may be an analysis target. Furthermore, each phase of the motion phase 34 is not limited to the above. For example, a predetermined period before the start of pitching (a period before phase 0) may be included as one phase.

The calculation unit 21 of the server device 2 analyzes the EPTS data and the score data according to the condition selected by the user with the pitcher selection unit 31, the viewpoint selection unit 32, and the motion phase selection unit 33, and displays the analysis result.

As the analysis result, an example is illustrated in which the pitching motion display unit 40 on the left side of the screen and the tendency display unit 60 on the right side of the screen are roughly displayed.

The pitching motion display unit40 is a region for intuitively and easily displaying how the pitching form is different between a fast ball and a breaking ball, for example.

The tendency display unit 60 is a region for displaying how much there is the pitching habit and the important movement considered as the habit.

First, the tendency display unit 60 will be described. The tendency display unit 60 displays a prediction accuracy 61, a time-series change graph 62, a message 63, an important motion model 64, a feature amount graph 66, an accuracy for each situation 67, and the like.

As described above, by the function of the analysis processing unit 21d, the calculation unit 21 learns the pitching motion data for each pitch of a pitcher to be analyzed, specifically, the skeleton capture data BD of the pitching motion, and generates the motion tendency information of the pitching motion of the pitcher. The motion tendency information is an AI model generated by learning the skeleton capture data BD and the score data SD as input data, information analyzed from the AI model, for example, the importance level of a feature amount of a body part in which a difference occurs for each ball type in the pitching motion, and the like.

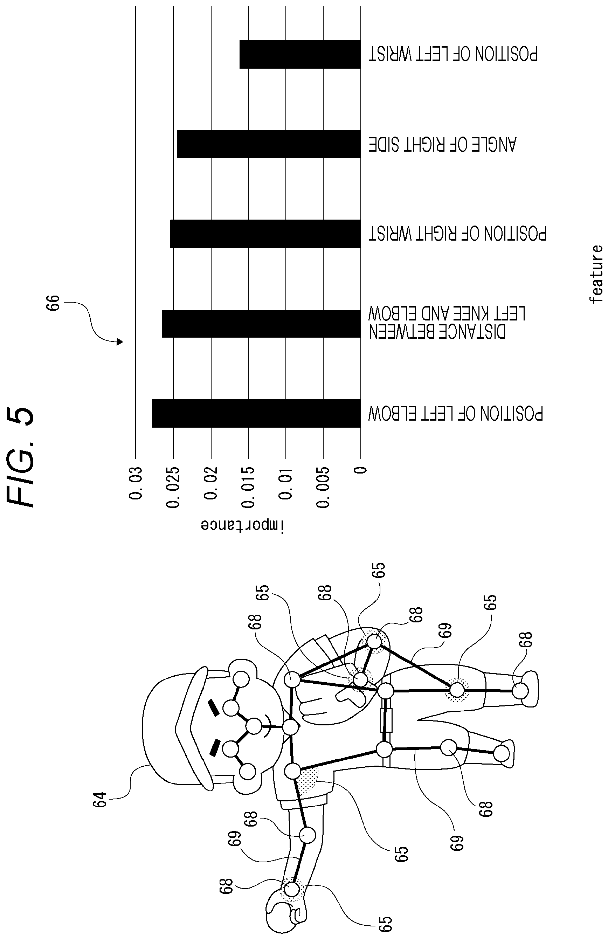

In the tendency display unit 60, an analysis result of the pitching motion of the target pitcher using the AI model is indicated by the important motion model 64 and the feature amount graph 66. The important motion model 64 and the feature amount graph 66 are enlarged and illustrated in Fig. 5.

The important motion model 64 indicates the joint 68 and the skeleton 69 in the pitcher image imitating the pitching motion. Then, the body position to be emphasized is highlighted as an attention point 65. The highlight as the attention point 65 emphasizes a specific part of the body related to an important movement of the body that is considered to have a possibility of habit by analysis of the AI model of the pitcher. The "important movement" mentioned here means a summary of a motion that is regarded as important when predicting a fast ball and a breaking ball in the AI analysis processing. For example, in a case where a difference is observed in the position (coordinate values in three-dimensional coordinates), the trajectory of the position change, the timing, and the like depending on the ball type, the motion in which the difference occurs is set as the important movement, and the body position related to the important movement is indicated as the attention point 65.

In this example, as the important movement emphasized at the attention point 65, "position of left elbow", "distance between left knee and elbow", "position of right wrist", "angle of right side", and "position of left wrist" are picked up.

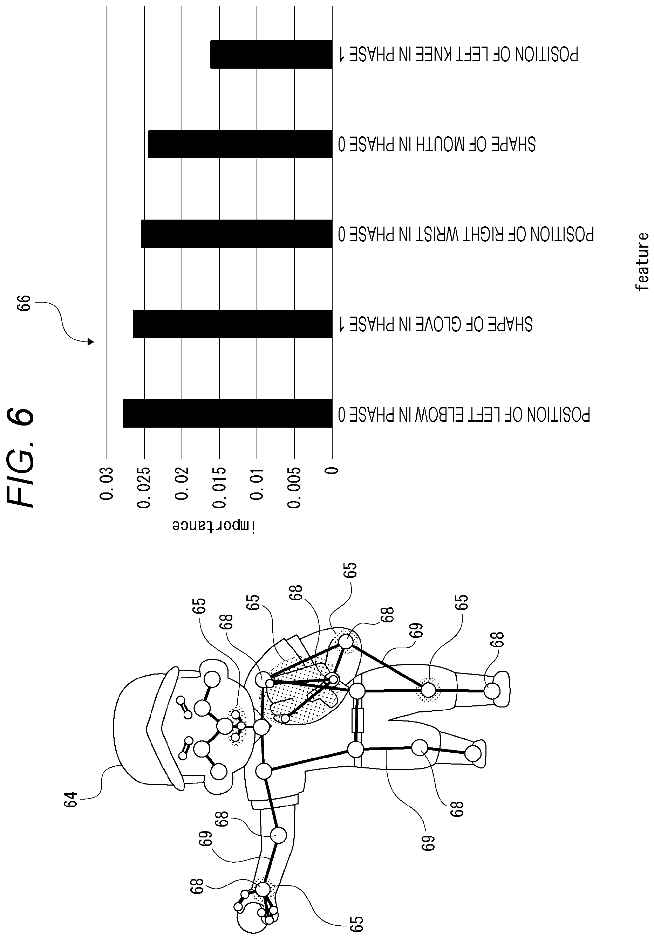

Note that the attention point 65 is not limited to the information indicating the body position (the position/angle of a part of the pitcher) related to the important movement as described above, and may include a timing, an expression, and a position of an item related to the important movement as illustrated in Fig. 6. For example, "position of left elbow in phase 0", "shape of glove in phase 1", "position of right wrist in phase 0", "shape of mouth in phase 0", and "position of left knee in phase 1" may be an important movement to be emphasized at the attention point 65.

In the feature amount graph 66 illustrated in Figs. 5 and 6, with the vertical axis being the importance level of feature amount, the importance level of feature amount for each important movement indicated by the horizontal axis is indicated.

The importance level is a degree of importance regarding determination of a habit. The more the motion tends to be different for each ball type, the higher the importance level. On the other hand, even if there is a difference in motion for each pitch, in a case where it cannot be said that the difference is a difference for each ball type, the importance level is low.

For example, in the case of analysis for the purpose of ball type prediction, it is determined whether or not it is important in terms of difference for each ball type. Therefore, in a case where not only the ball type but also the ball type and the course are predicted, a motion in which a difference is observed for each combination of the ball type and the course is the "important movement".

The user can obtain a hint for finding a habit of the pitcher by viewing the important motion model 64 and the feature amount graph 66.

For example, the user can recognize that there is a possibility of a habit by referring to the attention point 65 of the important motion model 64 and the importance level indicated by the feature amount graph 66 with respect to the "important movement" indicated by the attention point 65.

Note that, in Figs. 5 and 6, the important motion model 64 is illustrated as an example for description from the viewpoint of the batter, but in practice, it is desirable that the important motion model 64, the joint 68, and the skeleton 69 be displayed with directivity from the viewpoint selected by the viewpoint selection unit 32.

By the way, some pitchers have a habit for each ball type that is easy to observe, and some pitchers have almost no habit. In other words, whether or not a motion recognized as an "important movement" by analysis is actually a habit related to the ball type that can be visually recognized by a person varies depending on the pitcher.

Accordingly, the tendency display unit 60 also displays the prediction accuracy 61, the time-series change graph 62, the message 63, and the accuracy for each situation 67.

The prediction accuracy 61 indicates the accuracy of prediction by the AI model. The server device 2 calculates the accuracy of prediction by comparison between an actual pitching result (for example, a ball type) and a pitching result (for example, a ball type) predicted from the "important movement" under the current analysis condition (pitcher, viewpoint, and motion phase), and displays the value as the prediction accuracy 61.

If the value displayed with the prediction accuracy 61 is high, there is a high possibility that the user can determine a habit with reference to the displayed "important movement", and conversely, if the value displayed with the prediction accuracy 61 is low, there is a high possibility that the user cannot determine a habit even by focusing on the "important movement".

Furthermore, the time-series change graph 62 displays, for example, a change in the value of the prediction accuracy for each day. For example, assuming that new pitching motion data is input for each game and the AI model and analysis information based on the AI model are updated, the prediction accuracy changes in each game. A state of the change is indicated by the time-series change graph 62, and a situation of the change is clearly indicated in a message 63.

Note that the vertical axis of the time-series change graph 62 represents prediction accuracy, and the horizontal axis represents date and time.

In the example of Fig. 4, there is no significant change in the prediction accuracy depending on the day.

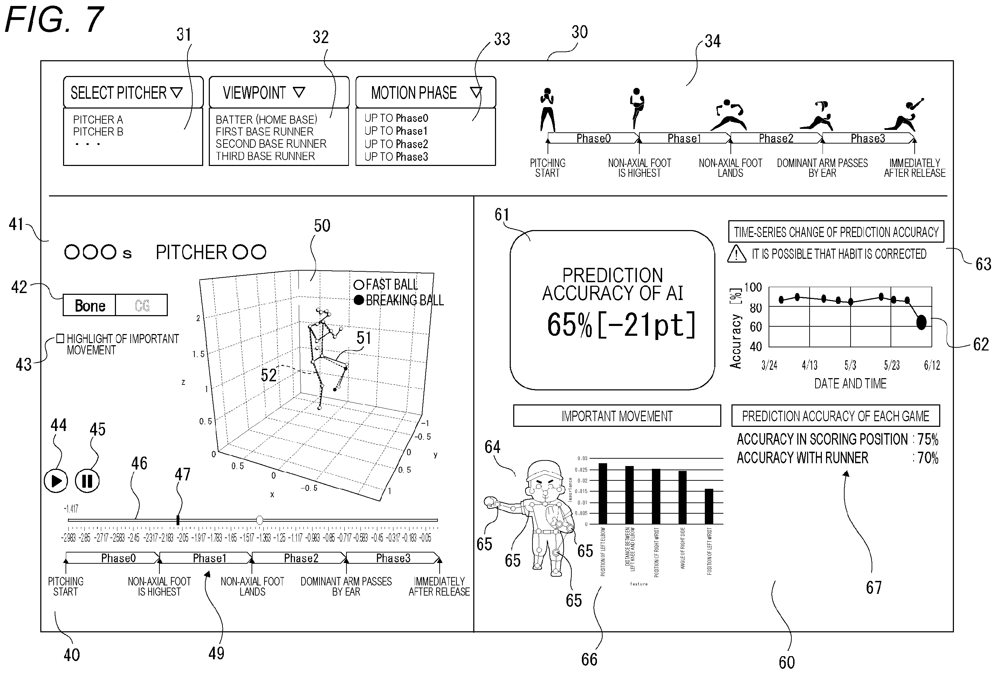

On the other hand, the pitcher to be analyzed may correct the habit, and the prediction accuracy may greatly change. Fig. 7 illustrates a state in which the value of the prediction accuracy 61 has decreased from around 86% to 65%. In such a case, it is conceivable to display the possibility that the habit has been corrected as the message 63.

Furthermore, the habit of a pitcher is easy or difficult to appear depending on the situation of the game. Accordingly, the prediction accuracy for each game situation is also displayed by the accuracy for each situation 67. For example, the server device 2 displays the accuracy in a situation where a runner is in a scoring position, the accuracy in a situation with a runner, the prediction accuracy in a situation without a runner, and the like. Thus, the user can adjust the degree of referring to the "important movement" by himself/herself according to the situation.

Next, the display of the pitching motion display unit 40 will be described.

The pitching motion display unit 40 displays a pitcher name 41, an image selection unit 42, a highlight selection unit 43, a play button 44, a stop button 45, a seek bar 46, a motion phase 49, a motion comparison display unit 50, and the like.

The team and the name of the pitcher are displayed as the pitcher name 41, clearly indicating who is the analysis target.

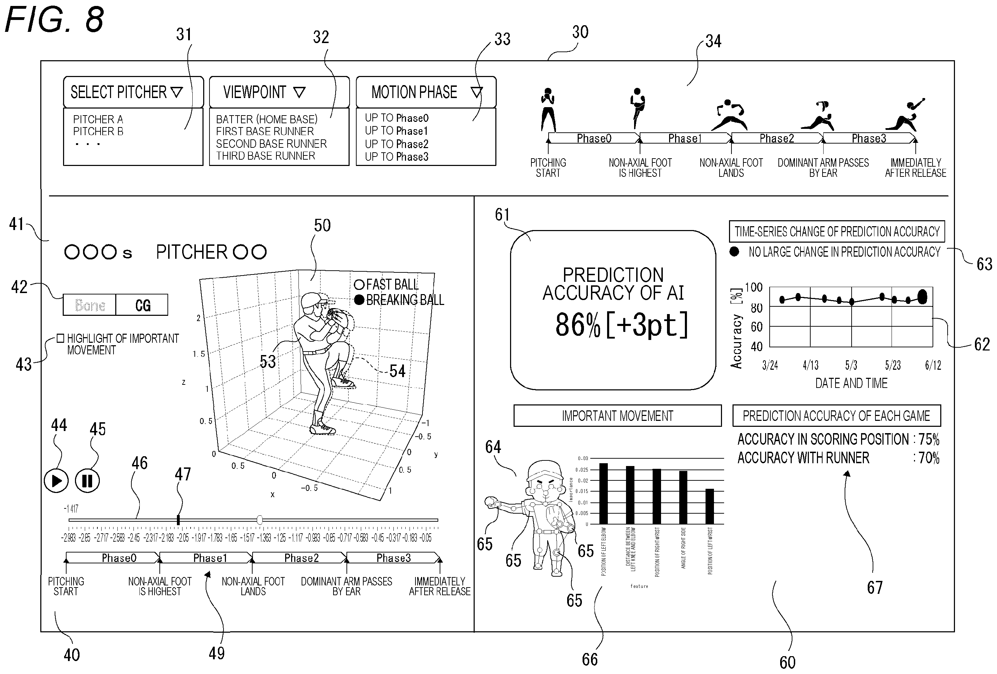

In the image selection unit 42, either "Bone (bone model)" or "CG (CG model)" can be selected, and the display of the motion comparison display unit 50 is switched according to the user's operation. In Fig. 4, the motion comparison display unit 50 illustrates an example of display of bone models 51 and 52 indicating the skeleton. In Fig. 8, the motion comparison display unit 50 illustrates an example of display of CG models 53 and 54 which are CG images of a pitcher.

The user can select which one of the display of the bone models 51 and 52 and the display of the CG models 53 and 54 is to be displayed on the motion comparison display unit 50 by operating the image selection unit 42.

The bone model 51 indicated by a solid line in Fig. 4 displays a pitching motion of the pitcher to be analyzed at the time of pitching a fast ball by a skeleton image, and the bone model 52 indicated by a broken line displays a pitching motion of the same pitcher at the time of pitching a breaking ball by a skeleton image.

The CG model 53 indicated by a solid line in Fig. 8 displays a pitching motion of the pitcher to be analyzed at the time of pitching a fast ball by a CG image, and the CG model 54 indicated by a broken line displays a pitching motion of the same pitcher at the time of pitching a breaking ball by a CG image.

The motion comparison display unit 50 displays the bone models 51 and 52 or the CG models 53 and 54 as a moving image in a three-dimensional coordinate space. The calculation unit 21 generates images of the bone models 51 and 52 and the CG models 53 and 54 by the function of the drawing processing unit 21a.

The calculation unit 21 generates the bone model 51 and the CG model 53 as an average form when the target pitcher pitches a fast ball. That is, the calculation unit 21 generates an average form of the pitching motion observed in the skeleton capture data when the pitching result is a fast ball, and sets the average form as the bone model 51, or generates the CG model 53 on the basis of the bone model 51.

Similarly, the calculation unit 21 generates the bone model 52 and the CG model 54 as an average form when the target pitcher pitches a breaking ball. That is, the calculation unit 21 generates an average form of the pitching motion observed in the skeleton capture data when the pitching result is a breaking ball, and sets the average form as the bone model 52, or generates the CG model 54 on the basis of the bone model 52.

By displaying the bone models 51 and 52 in a superimposed manner in the motion comparison display unit 50, the user can easily intuitively recognize the difference in form between the fast ball pitching and the breaking ball pitching. Furthermore, since the bone models 51 and 52 are used, it is easy to understand the difference in form.

Furthermore, by displaying the CG models 53 and 54 in an overlapping manner on the motion comparison display unit 50, the user can easily recognize the difference in form between the fast ball pitching and the breaking ball pitching. In the case of the CG models 53 and 54, an image is closer to a pitcher actually seen from the batter's box or the like than the bone models 51 and 52, and thus is valuable to the user in that respect.

That is, it is desirable for the user to see while switching between the bone models 51 and 52 and the CG models 53 and 54.

Note that, although the bone models 51 and 52 and the CG models 53 and 54 are illustrated from the viewpoint of a third base runner coach as an example for description in the drawing, in practice, the bone models 51 and 52 and the CG models 53 and 54 are desirably generated as a pitching motion viewed from the viewpoint selected by the viewpoint selection unit 32.

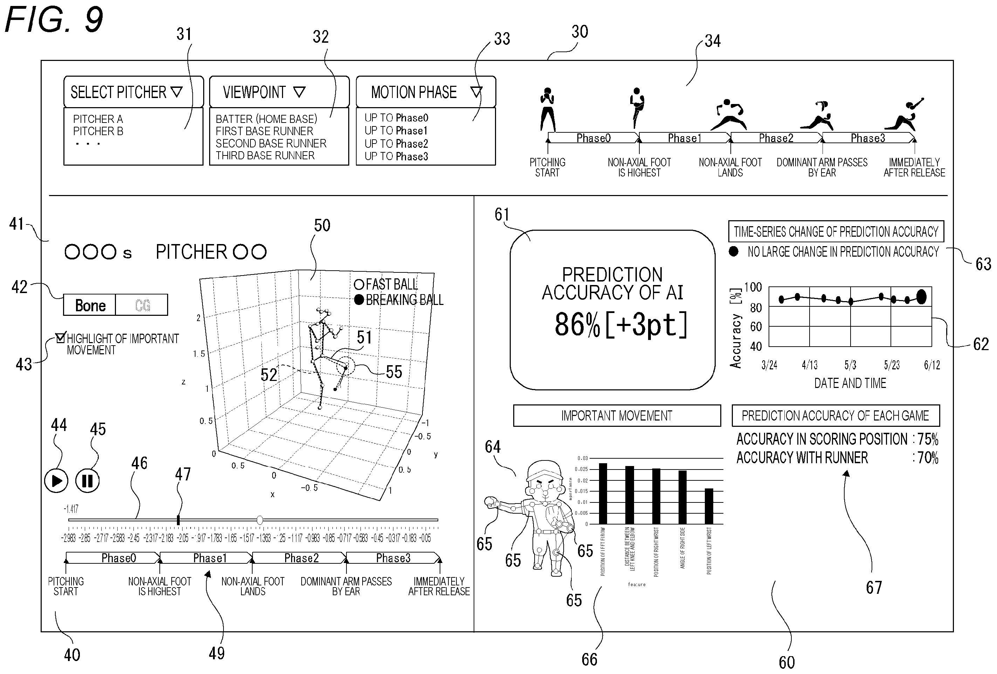

The highlight selection unit 43 is provided with a check box for allowing the user to select whether or not to execute highlight display on the display of the motion comparison display unit 50. When the user checks the check box, a highlight 55 is added as illustrated in Fig. **9****.** The highlight 55 emphasizes a portion where there is a different motion between the fast ball and the breaking ball.

The play button 44, the stop button 45, and the seek bar 46 are prepared for playback operation of the moving image by the bone models 51 and 52 or the CG models 53 and 54 in the motion comparison display unit 50. The user can start playback of the moving images of the bone models 51 and 52 or the moving images of the CG models 53 and 54 by operating the play button 44, and can stop the playback by operating the stop button 45.

This moving image is a moving image in a period from the start time of the pitching motion to immediately after the release. A slider 47 on the seek bar 46 indicates the current playback position.

Furthermore, since the motion phase 49 is displayed along the seek bar 46, it is easy to understand which phase the current playback portion is in.

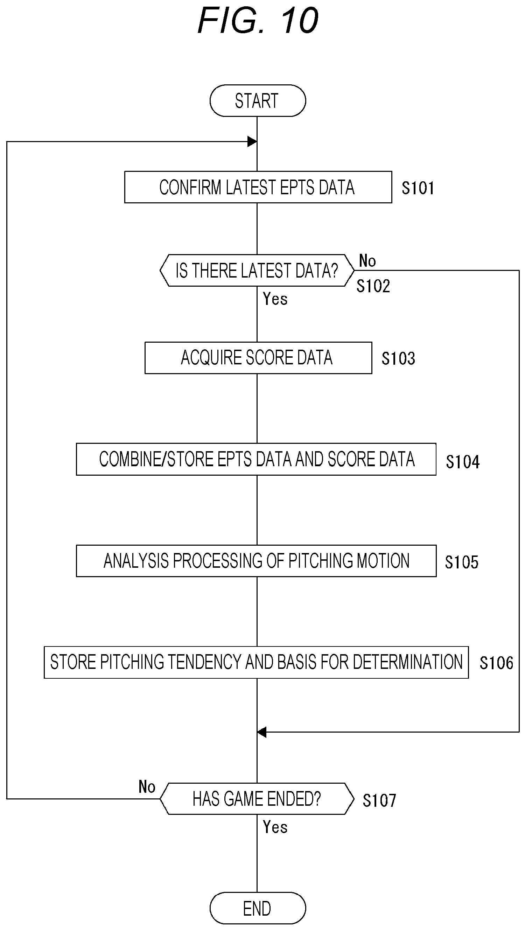

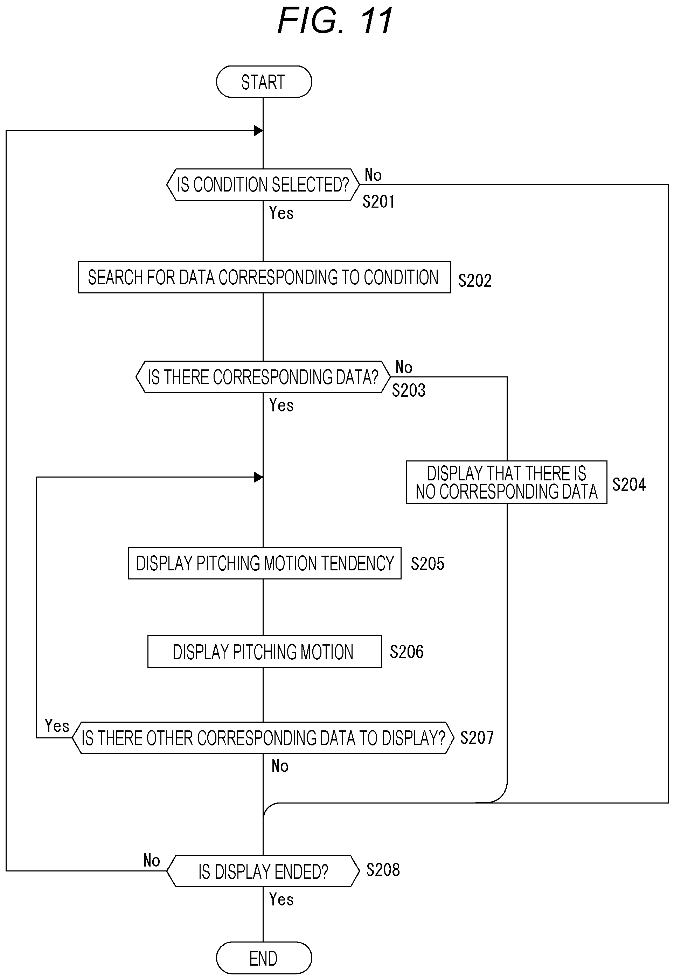

Figs. 10 and 11 illustrate processing examples of the calculation unit 21 of the server device 2 for displaying the tendency presentation screen 30 as described above.

Fig. 10 illustrates processing for accumulating data of pitching motions, for example, processing for accumulating data of pitching motions according to a certain game. This processing may be performed in real time during a game, or may be performed by inputting data collectively after a game or the like.

In step S101, the calculation unit 21 checks whether the latest EPTS data exists. Here, the latest EPTS data is the EPTS data that the calculation unit 21 has not yet performed the processing of Fig. 10.

During the game, data such as the skeleton capture data BD of the pitcher, the trajectory of the ball, and the number of revolutions is input for each pitch as the game progresses. If there is such an input, there is unprocessed EPTS data. Alternatively, after the game, since the EPTS data has already been stored for all pitches of the target game, all the EPTS data is the unprocessed EPTS data.

Note that the EPTS data for all pitches may include not only EPTS data for pitching to a batter but also EPTS data for a pickoff ball. For example, in order to perform display for finding habits of pitching and pickoff ball from the viewpoint of the first base runner on the tendency presentation screen 30, EPTS data of the pickoff ball is also necessary.

When the latest EPTS data exists, the calculation unit 21 advances the processing from step S102 to step S103. If the latest EPTS data does not exist, the calculation unit 21 proceeds to step S107, and if the game has not ended, the calculation unit 21 returns to step S101.

In step S103, the calculation unit 21 acquires the score data SD corresponding to the latest EPTS data. That is, as a result of pitching, data associated with unprocessed EPTS data is acquired as score data SD such as a ball type, an out count, and a situation of runner.

In step S104, the calculation unit 21 performs processing of storing combined data obtained by combining the score data SD with the current EPTS data in the storage medium. The storage medium is, for example, the storage unit 79 in Fig. 3.

In step S105, the calculation unit 21 performs analysis processing of a pitching motion. That is, the calculation unit 21 inputs the current EPTS data as processing by the function of the analysis processing unit 21d, generates or updates the AI model of the pitcher who is pitching, analyzes the important movement using the AI model, and the like. Then, the calculation unit 21 stores information of the AI model and an analysis result, that is, the model of a pitching form of the pitcher who has pitched the ball, information of an important movement for ball type prediction, and the like in the storage medium as the motion tendency information.

Moreover, the calculation unit 21 performs prediction on the basis of the "important movement" determined by the AI model for past pitching, and also stores information on whether or not the prediction is correct. This is for displaying the prediction accuracy 61 and the like.

Specifically, the motion tendency information to be stored is, for example,
- input data of the AI model (preprocessed EPTS data and score data)
- a learned AI model
- a prediction result and a true value of the AI model
- information of a feature amount of an important motion.

Note that the analysis processing in step S105 is performed for each condition so as to obtain a result in accordance with condition selection on the tendency presentation screen 30.

For example, in a case where an AI model of a pitching motion of a certain pitcher is generated on the basis of the skeleton capture data BD, respective feature amounts are analyzed by motions that can be observed from respective viewpoints (batter viewpoint, viewpoint from first base, viewpoint from second base, and the like) for the AI model. Moreover, for each motion phase, a feature amount in phase 0, a feature amount up to phase 1, a feature amount up to phase 2, and a feature amount up to phase 3 are analyzed. Then, all the pieces of information are stored in the storage medium as the information of the feature amount of the important movement related to a certain pitcher.

By executing the above processing in step S107 until the game is ended, the motion tendency information about the pitcher who takes the plate in this game is generated or updated.

By performing such processing in each game, the motion tendency information for a large number of pitchers is generated and updated.

Fig. 11 is a processing example of the calculation unit 21 when the user requests the display of the tendency presentation screen 30. For example, the processing is performed in a case where the user activates an application program of an analysis service provided by the server device 2 in the terminal device 5.

In step S201, the calculation unit 21 monitors condition selection by the user. For example, when the application program is activated in the terminal device 5, the server device 2 first displays the pitcher selection unit 31, the viewpoint selection unit 32, and the motion phase selection unit 33 on the tendency presentation screen 30, and requests the user to make a selection.

In a period in which the condition is not selected, the calculation unit 21 proceeds to step S208, and returns to step S201 if the application program is not ended.

Upon receiving the condition selected from the terminal device 5 according to an operation by the user, that is, the condition of the target pitcher, viewpoint, and motion phase, the calculation unit 21 proceeds from step S201 to step S202 and searches for data corresponding to the condition. The data to be searched for here is combined data of the EPTS data and the score data SD stored in the storage medium in step S104 of Fig. 10, and is combined data for the pitcher corresponding to the condition.

Note that, even in a case where the condition is not selected in step S201, in response to the input of the search start instruction by the user operation, the calculation unit 21 may proceed from step S201 to step S202 and search for data corresponding to a predetermined condition. The predetermined condition is, for example, a condition under which a result with the highest prediction accuracy can be obtained or a condition under which the number of times the user has browsed in the past is large.

A case where there is no combined data corresponding to the condition means that a sample of pitching has not been obtained for the current target pitcher. That is, the processing of Fig. 10 is not performed for the pitcher targeted this time. In that case, the calculation unit 21 proceeds from step S203 to step S204, instructs the terminal device 5 to display that there is no corresponding data on the tendency presentation screen 30, and proceeds to step S208.

Note that, in step S203, it is not limited to the determination as to whether there is the combined data corresponding to the condition, and it may be determined whether there is a predetermined number or more of pieces of the combined data corresponding to the condition. For example, the processing may proceed to step 205 in a case where the number of pieces of combined data falling under the condition is equal to or more than 100, and the process may proceed to step S204 in a case where the number of pieces of combined data is less than 100.

On the other hand, in a case where there is the combined data corresponding to the condition, the calculation unit 21 proceeds from step S203 to step S205, and performs display control of the tendency of the pitching motion. This is display control of the tendency display unit 60.

In this case, the calculation unit 21 reads out the motion tendency information matching the conditions of the pitcher, the viewpoint, and the phase among the motion tendency information stored in the storage medium in step S106 of Fig. 10. Then, the prediction accuracy 61, the time-series change graph 62, the message 63, the important motion model 64, the feature amount graph 66, and the accuracy for each situation 67 are displayed on the basis of the read motion tendency information.

Subsequently, in step S206, the calculation unit 21 performs display control of the pitching motion display unit 40.

The calculation unit 21 extracts a sample that meets a condition from the combined data of the EPTS data and the score data SD, and generates the bone models 51 and 52 or the CG models 53 and 54 by the function of the drawing processing unit 21a. For example, the combined data of the pitcher corresponding to the condition is extracted, and the combined data is classified according to whether the pitching result is fast ball or breaking ball. Then, the bone model 51 or the CG model 53 is generated as an average form of the skeleton capture data BD in the combined data as a sample of fast ball. Furthermore, the bone model 52 or the CG model 54 is generated as an average form of the skeleton capture data BD in the combined data used as a sample of breaking ball.

At this time, the calculation unit 21 sets the bone models 51 and 52 or the CG models 53 and 54 to be generated as images viewed from the viewpoint designated by the condition selection.

Then, the calculation unit 21 displays the generated bone models 51 and 52 or CG models 53 and 54 on the motion comparison display unit 50 of the tendency presentation screen 30.

Furthermore, the calculation unit 21 performs control to display the pitcher name 41, the image selection unit 42, the highlight selection unit 43, the play button 44, the stop button 45, the seek bar 46, and the motion phase 49.

Note that, although not illustrated in Fig. 11, during the display of the pitching motion display unit 40, the calculation unit 21 controls the start or stop of moving image playback in accordance with the user's playback operation (operation of the play button 44) or pause operation (operation of the stop button 45) for the bone models 51 and 52 or the CG models 53 and 54.

Furthermore, the calculation unit 21 also performs control of the position of the slider 47 in the seek bar 46 according to the progress of playback, control of changing the playback position according to the operation of the slider 47, and the like.

Moreover, the calculation unit 21 also performs display control of the highlight 55 according to the operation of the highlight selection unit 43 and switching control of the bone models 51 and 52 and the CG models 53 and 54 according to the operation of the image selection unit 42.

However, all or part of the control may be performed as control by an application program on the terminal device 5 side.

In step S207, the calculation unit 21 confirms whether or not there is data to be reflected in the display other than the data searched in step S202. Then, in a case where there is another corresponding data, the processing of steps S205 and S206 is performed. Thus, other corresponding data is also reflected in the display content.

In step S208, the calculation unit 21 determines the end of the display, for example, the end of the application program by the user's operation, and returns to step S201 if the display is not ended. In response to the end determination, the calculation unit 21 ends the processing of Fig. 11.

By the processing of Figs. 10 and 11 described above, display of the tendency presentation screen 30 described with reference to Figs. 4 to 9 is executed on the terminal device 5. Thus, the user can obtain information that contributes to the determination of the habit of the pitcher.

### <3. Second Embodiment: Processing of Training Screen>

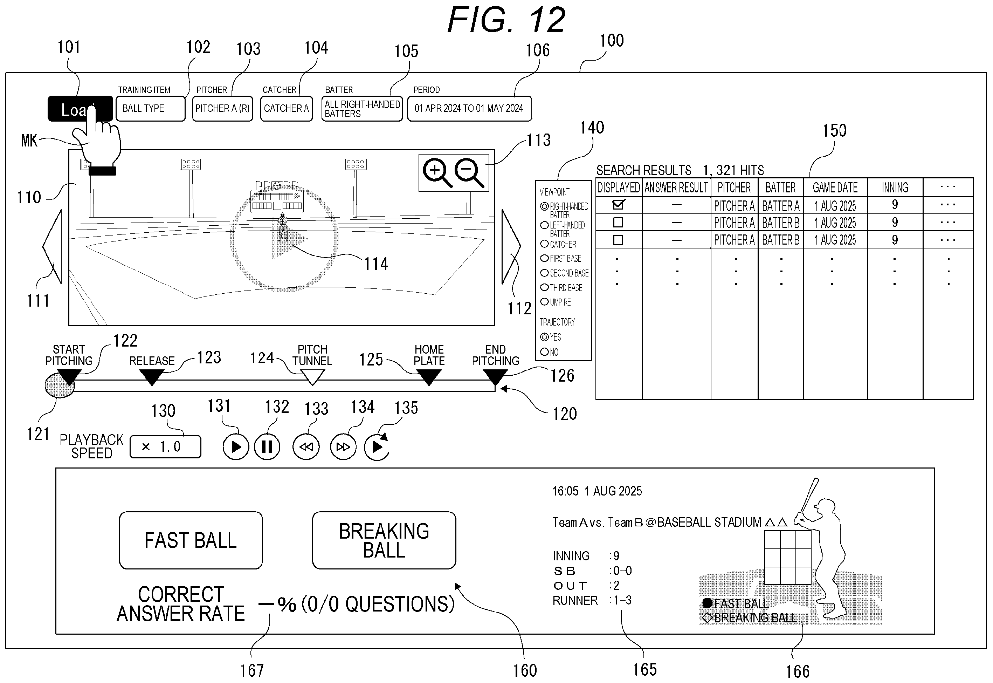

As a second embodiment, processing for the training screen 100 as illustrated in Fig. 12 will be described. A service for providing the training screen 100 is also performed by the server device 2.

The training screen 100 provided by the server device 2 enables confirmation of a pitching motion and a pitching trajectory from any viewpoint of a batter, an umpire, or the like, and enables perceptual training for predicting a ball type or the like from the image (for example, a CG moving image).

The training screen 100 of Fig. 12 will be described.

On the training screen 100, a load button 101, an item selection unit 102, a pitcher selection unit 103, a catcher selection unit 104, a batter selection unit 105, and a period selection unit 106 are displayed.

The item selection unit 102 is a field in which the user selects a training item. For example, items such as a ball type determination, a strike/ball judgment, and a pitching/pickoff judgment are prepared, and can be selected by the user.

The pitcher selection unit 103 is a field in which the user selects a target pitcher. For example, the user can select a team name or a pitcher name.

The catcher selection unit 104 is a field in which the user selects a catcher. For example, the user can select a team name or a catcher name. All catchers can also be selected.

The batter selection unit 105 is a field in which the user selects a batter. For example, the user can select the batter's name. All batters, all right-handed batters, all left-handed batters, and the like can also be selected. The target pitcher selected by the pitcher selection unit 103 may be able to select all batters or the like by limiting to the opponent team against which the pitcher played.

The period selection unit 106 is a field for selecting a period for collecting samples of pitches to be trained. The period is set by specifying the date. For example, the user displays a calendar screen by clicking a field of the period selection unit 106 or the like, and can designate the first day and the last day of the period.

In a case where the user inputs or selects the item selection unit 102, the pitcher selection unit 103, the catcher selection unit 104, the batter selection unit 105, and the period selection unit 106, and operates the load button 101 as a click operation of a mouse cursor MK as illustrated in the drawing, the server device 2 performs processing of searching for the corresponding pitching data and displaying the data of the corresponding pitch on a pitch table 150.

In the pitch table 150, pitches according to the condition, that is, pitches corresponding to the condition selected by the user among pitches for which data has been acquired in the past as the EPTS data and the score data SD are listed. In the pitch table 150, one row corresponds to one pitch. Then, for one pitch, information obtained on the basis of the score data SD or the like, such as a displayed box, an answer result, a pitcher name, a batter name, a game date, an inning, and a catcher name, is displayed.

The pitching including the pitch table 150 is a sample of pitching used for training.

On the training screen 100, a pitching video 110 is displayed. As the pitching video 110, a CG moving image for one pitch on the pitch table 150 is displayed. That is, the pitching video is a CG moving image that expresses the pitching form of the pitcher, which is generated on the basis of the skeleton capture data BD for one certain pitch on the pitch table 150. Furthermore, the trajectory of the ball can also be displayed based on the EPTS data.

Furthermore, the training screen 100 is provided with an image condition selection unit 140. The image condition selection unit 140 allows the user to select whether to display the viewpoint position and the trajectory.

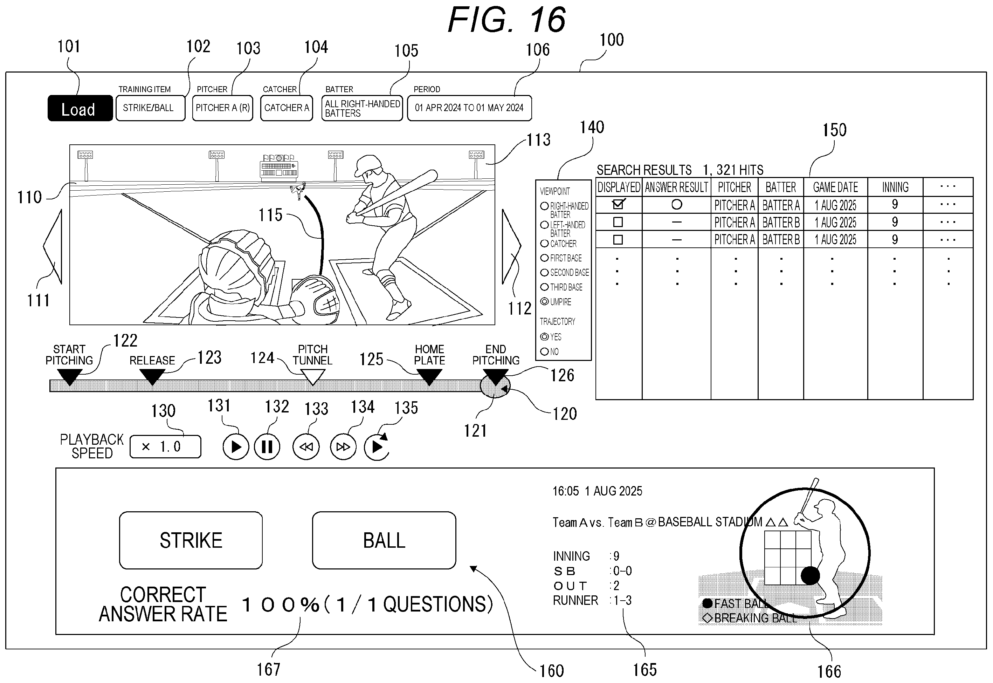

As the viewpoint position, a right-handed batter, a left-handed batter, a catcher, a first base, a second base, a third base, and an umpire can be selected. The calculation unit 21 generates CG according to the selected viewpoint position to generate the pitching video 110. For example, a pitching video 110 in Figs. 12 to 15 is an example of an image of the viewpoint position of the right-handed batter, and a pitching video 110 in Fig. 16 is an example of an image of the viewpoint position of the umpire.

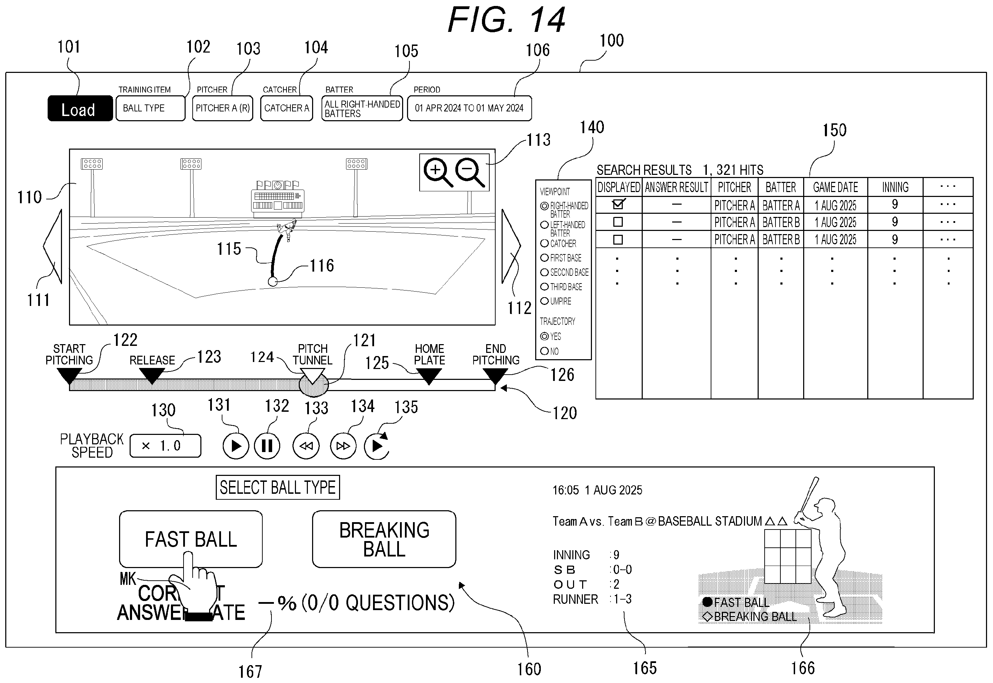

Furthermore, the trajectory is a trajectory of the ball, and the user can select whether or not to display the trajectory. For example, Figs. 14, 15, and 16 illustrate an example in which a trajectory 115 is displayed in addition to the ball 116.

Forward buttons 111 and 112, a scaling button 113, a play button 114, a seek bar 120, a playback speed setting unit 130, a play button 131, a stop button 132, a fast rewind button 133, a fast forward button 134, a repeat button 135, and the like are displayed as operators related to the pitching video 110.

The forward buttons 111 and 112 are operators for switching the displayed pitching video 110 to preceding or subsequent pitching on the pitch table 150.

The scaling button 113 is an operator for scaling the pitching video 110.

The play buttons 114 and 131 are operators for starting playback of the pitching video 110.

The stop button 132 is an operator for stopping the playback of the pitching video 110.

The fast rewind button 133 and the fast forward button 134 are operators for performing fast rewind or fast forward of the playback of the pitching video 110.

The repeat button 135 is an operator that executes repeat playback of the pitching video 110.

The playback speed setting unit 130 is a field in which the user sets the playback speed of the pitching video 110.

The pitching video 110 is a moving image of a period from the start time point to the end time point of the pitching motion, and the end time point in this case is a time point when the ball passes the home plate and is caught by the catcher. Note that, in the past pitching samples listed in the pitch table 150, there are samples in which batting is actually performed and the ball does not pass through the home plate and samples in which the catcher cannot catch the ball, but it is preferable that the pitching video 110 is generated as a CG moving image in a state in which a batter does not swing, and the pitching end timing is set to the catching timing regardless of whether or not the catcher actually catches the ball.

In the seek bar 120, the slider 121 indicates the current playback position of the pitching video 110.

The pointers 122, 123, 124, 125, and 126 are indicated with respect to the seek bar 120 in a period from a start time point to an end time point of the pitching motion.

The pointer 122 indicates a pitching start timing. The pointer 123 indicates a release timing. The pointer 124 indicates a timing of a pitch tunnel. The pointer 125 indicates a timing of passing through the home plate. The pointer 126 indicates a timing of ending the pitching.

The user can recognize each of the timings in the pitching video 110 by the pointers 122, 123, 124, 125, and 126.

Note that the pitch tunnel generally means a point at which it becomes difficult for a batter to distinguish the ball type, and a pitcher is advised to cause the ball to break after passing through the pitch tunnel. The pitch tunnel is said to be located about 7 m to 10 m from the home plate. Although the pitch tunnel is not a quantitatively determined value, in the training screen 100, the pointer 124 is displayed at a timing substantially corresponding to the pitch tunnel as a timing for performing training to distinguish the ball type.

The pitching video 110 is automatically paused at the timing of the pointer 124 after the playback is started. The timing is the user's answer timing. Note that the pitching video 110 may be reproduced by automatically decreasing the playback speed at the timing of the pointer 124. By lowering the playback speed at the timing of the pointer 124, it is possible to lower the difficulty level of training for distinguishing the ball type.

The position of the pointer 124 can be moved back and forth by a user's drag operation or the like. Thus, the user can arbitrarily adjust the answer timing. As the position of the pointer 124 is moved to the pitching start side, the user is requested to determine the ball type at an early stage of the pitching video 110.

An answer button 160 is prepared on the training screen 100 so that the user can input an answer. In the example of Fig. 12, an interface is used so that one of "fast ball" and "breaking ball" can be selected and answered for training of the ball type determination.

Furthermore, detailed information regarding the current pitching video 110 is displayed by the pitching information display unit 165. Specifically, the actual pitching date and time, the opposing team, the stadium, the inning, the strike/ball count, the out-count, the runner status, and the like, which are the basis of the displayed pitching video 110, are displayed.

Furthermore, a result display unit 166 displays a result indicating whether the user's answer is a correct answer or an incorrect answer.

Moreover, a correct answer rate 167 is also displayed.

An example of the progress of the training screen 100 will be described.

When the user sets each selection unit such as the item selection unit 102 and operates the load button 101 as illustrated in Fig. 12, the pitch table 150 of the corresponding pitch is displayed as illustrated in Fig. 12. The pitching video 110 is sequentially displayed for the randomly selected pitches from the pitch table 150.

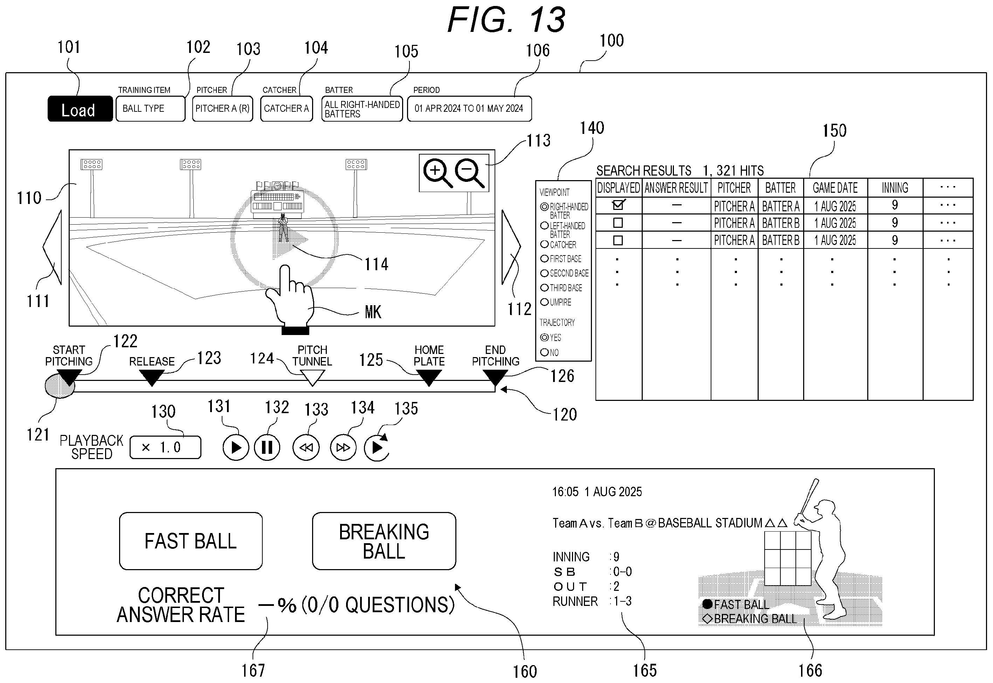

As illustrated in Fig. 13, when the user operates, for example, the play button 114, playback of the pitching video 110 is started.

The playback of the pitching moving image is temporarily stopped at the timing of the pointer 124 as illustrated in Fig. 14, and the answer of the user is waited. The user inputs an answer by clicking the answer button 160 with the mouse cursor MK or the like.

Since the user determines the ball type from the temporarily stopped image, it is preferable that not only the ball 116 but also the trajectory 115 be displayed.

However, in order to perform advanced training, it is preferable to turn off the display of the trajectory 115 and to determine the ball type in the moving image up to immediately before the temporary stop.

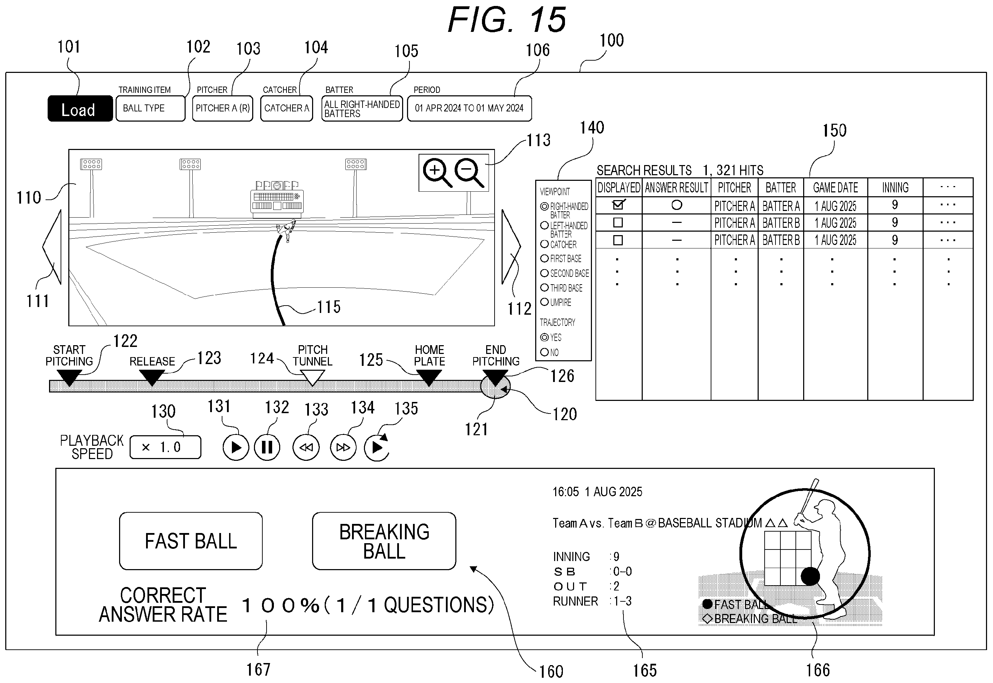

In response to the input of the answer, the playback of the pitching video 110 is resumed, and the pitching ends as illustrated in Fig. 15. Furthermore, whether the answer is a correct answer or an incorrect answer is displayed on the result display unit 166.

For example, "∘" or "correct answer" is displayed in the case of a correct answer, "×" or "incorrect answer" is displayed in the case of a wrong answer. Furthermore, a course through which the ball has passed on a scale obtained by dividing the strike zone into nine is also displayed. Fig. 15 illustrates an example in which "o" is displayed on the result display unit 166.

As described above, the user can determine and answer the ball type from the viewpoint of, for example, a right-handed batter or a left-handed batter, and confirm the result. Therefore, it is effective as training for a batter to determine the ball type of an opponent pitcher.

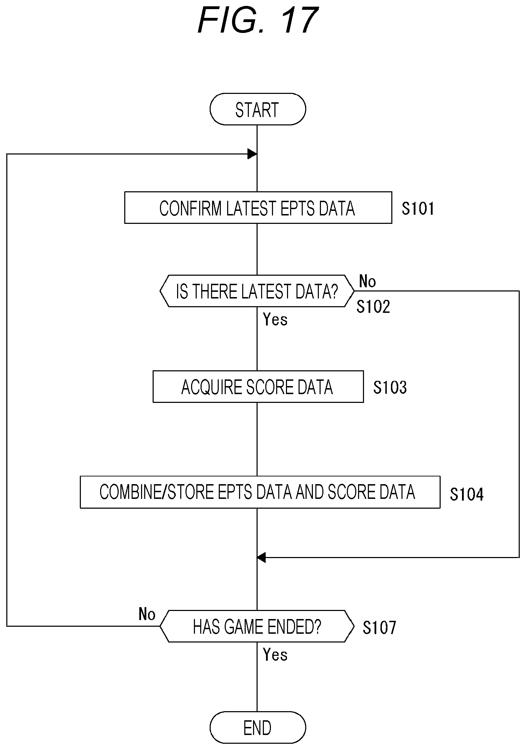

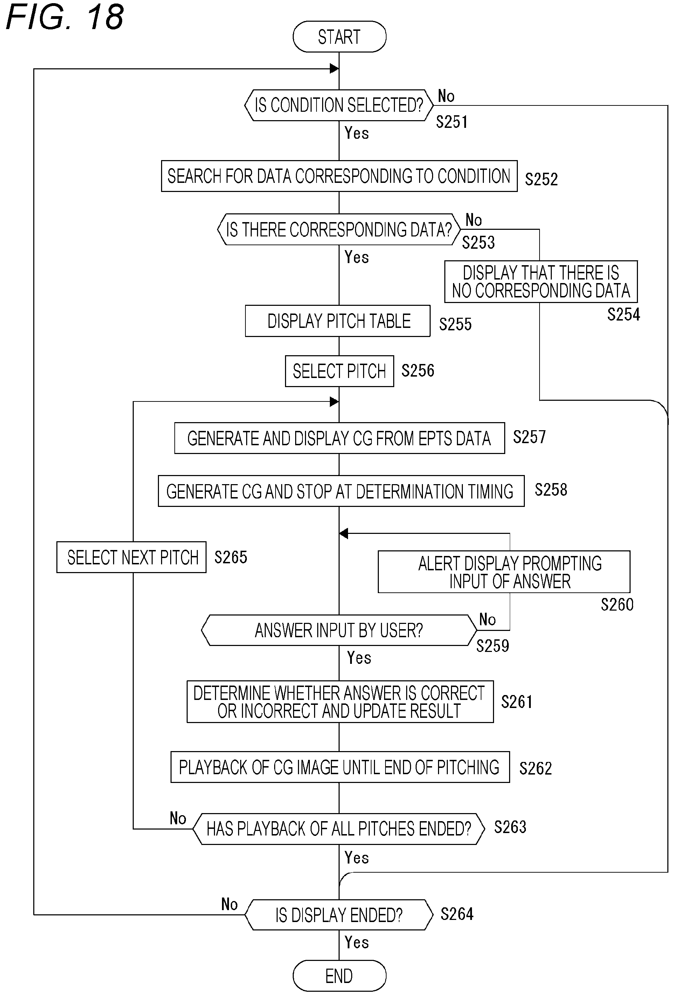

Figs. 17 and 18 illustrate processing examples of the calculation unit 21 of the server device 2 for providing such a training screen 100.

Fig. 17 illustrates processing of accumulating data of pitching motions, for example, accumulating data of pitching motions according to a certain game. This processing may be performed in real time during a game, or may be performed by inputting data collectively after a game or the like.

In the processing of Fig. 17, processing similar to that of Fig. 10 is denoted by the same step number. The difference from Fig. 10 is that the processing of steps S105 and S106 is not performed.

Since other steps S101, S102, S103, S104, and S107 are similar to those in Fig. 10, they are illustrated only in the drawing, and redundant description of details of the processing is avoided.

In the processing of Fig. 17, the calculation unit 21 only needs to store combined data obtained by combining the score data SD with the EPTS data in step S104 in the storage medium, and does not need analysis for prediction of the ball type.

If the server device 2 performs both the service for providing the tendency presentation screen 30 and the service for providing the training screen 100 and performs the processing of Fig. 10, it is not necessary to separately perform the processing of Fig. 17.

Fig. 18 illustrates a processing example of the calculation unit 21 when the user requests the display of the training screen 100. For example, the processing is performed in a case where the user activates the application program of the training service provided by the server device 2 on the terminal device 5.

In step S251, the calculation unit 21 monitors condition selection by the user. For example, when the application program is activated in the terminal device 5, the server device 2 first monitors operations on the load button 101, the item selection unit 102, the pitcher selection unit 103, the catcher selection unit 104, the batter selection unit 105, and the period selection unit 106 on the training screen 100.

In a period in which the load button 101 is not operated, the calculation unit 21 proceeds to step S264, and returns to step S251 if the application program is not ended.

Upon receiving the condition selected from the terminal device 5 according to the user's operation, that is, the settings of the item selection unit 102, the pitcher selection unit 103, the catcher selection unit 104, the batter selection unit 105, and the period selection unit 106 and the operation of the load button 101, the calculation unit 21 proceeds from step S251 to step S252 and searches for data corresponding to the condition. The data to be searched here is the combined data of the EPTS data and the score data SD stored in the storage medium in step S104 of Fig. 17 (or Fig. 10), and is the combined data for a pitching ball corresponding to the condition.

In a case where there is no combined data corresponding to the condition, the calculation unit 21 proceeds from step S253 to step S254, instructs the terminal device 5 to display that there is no corresponding data on the training screen 100, and proceeds to step S264.

On the other hand, in a case where there is the combined data corresponding to the condition, the calculation unit 21 proceeds from step S253 to step S255, and performs the display control of the pitch table 150.

That is, a list of information about the corresponding pitches extracted by the search is displayed.

Furthermore, in step S256, the calculation unit 21 randomly selects a pitch to be first presented to the user from the pitches listed in the pitch table 150.

For the selected pitch, the field of "displaying" is checked like a pitch in the first row of the pitch table 150 in Fig. 12.

Note that, here, the calculation unit 21 randomly selects a pitch to be displayed first from the pitch table 150, but the pitch may be designated by the user, or may be selected in order of oldest or newest pitch date and time.

When the pitch to be displayed is selected, the calculation unit 21 generates the pitching video 110 of the pitch in step S257, and displays the pitching video in a state of waiting for the start of playback as illustrated in Fig. 12. For example, a still image at the time of starting pitching and the play button 114 are displayed.

At this time, the calculation unit 21 sets the generated pitching video 110 as an image based on the viewpoint position selected by the image condition selection unit 140.

Therefore, as the processing of step S257, the calculation unit 21 generates the CG moving image of the pitching motion viewed from the selected viewpoint position on the basis of the skeleton capture data BD of the currently selected pitching, and displays the head frame of the CG moving image.

Note that, in a case where the user changes the viewpoint position by the image condition selection unit 140 in the state before the playback, the calculation unit 21 generates the CG moving image of the pitching motion viewed from the new viewpoint position on the basis of the skeleton capture data BD of the selected pitch, and displays the head frame. Thus, a playback standby state by the pitching video 110 whose viewpoint position has been switched is set.

In response to the user operating the play button 114 or the play button 131, the calculation unit 21 proceeds to step S258 and starts playing the pitching video 110.

Note that the calculation unit 21 also controls the presence or absence of display of the trajectory 115 according to the setting of the trajectory in the image condition selection unit 140 for the pitching video 110.

The calculation unit 21 automatically stops the playback of the pitching video 110 at the timing of the pointer 124. In a state where the playback is stopped, the calculation unit 21 waits for the user's answer input in step S259.

Until the answer input is detected, the calculation unit 21 performs control to cause an alert display to be executed to prompt the user to input an answer in step S260.

When the answer input is detected, the calculation unit 21 proceeds from step S259 to step S261, and performs control to determine whether the answer result is correct or incorrect and displays the result. For example, the result display unit 166 and the correct answer rate 167 are displayed as illustrated in Fig. 16.

Furthermore, the calculation unit 21 resumes the playback of the pitching video 110 in step S262, and performs the playback until the end of the pitching motion.

Note that updating of the display of the result display unit 166 and the correct answer rate 167 may be performed together with the restart of the playback of the pitching video 110, or may be performed at the time when the playback ends the pitching (pointer 126).

Furthermore, the order of the processing in steps S261 and S262 may be reversed.

The correctness/incorrectness determination performed by the calculation unit 21 in step S261 includes the following two types of processing [Example 1] and [Example 2], and may be performed in either one, or the user may select either one.

### [Example 1]

The actually observed ball type remaining in the score data SD is compared with the user's answer as a correct answer.

### [Example 2]

The ball type is determined with reference to the information of the trajectory of the ball based on the EPTS data, and the determination result is compared with the user's answer as a correct answer.

In step S263, the calculation unit 21 determines whether or not the playback of all pitches on the current pitch table 150 has ended.

Note that even if the playback of all the pitches of the current pitch table 150 has not been completed, for example, in a case where the condition setting is changed and the load button 101 is operated, the calculation unit 21 may determine that the playback processing related to the current pitch table 150 is ended.

If the playback of the current pitch table 150 is not ended, the calculation unit 21 proceeds from step S263 to step S265, and randomly selects a pitch to be presented as the next pitching video 110 from the pitch table 150. For example, the remaining pitches that have not yet been selected are randomly selected.

Note that the user may be allowed to select a pitch to be displayed next.

Then, the calculation unit 21 proceeds to step S257, generates a CG image of the pitch selected in step S265, and displays the first frame of the pitching video 110. The same applies hereinafter.

By repeating steps S257 to S263, the user can perform perceptual training on the pitches listed on the pitch table 150.

When it is determined in step S263 that the playback of all the pitches has ended, the calculation unit 21 determines in step S264 that the display of the training screen 100 has ended, for example, that the application program has ended by the user's operation, and returns to step S251 if the playback has not ended. In response to the end determination in step S264, the calculation unit 21 ends the processing of Fig. 18.

By the processing of Figs. 17 and 18 described above, the display of the training screen 100 described with reference to Figs. 12 to 15 is executed in the terminal device 5. Thus, the user can perform training for determining the habit of the pitcher.

Note that, in the playback control of the pitching video 110 in step S258, step S262, or the like, as processing by the calculation unit 21 or the application program on the terminal device 5 side, control such as stop, playback, fast return, fast forward, repeat playback, and change of the playback position of the seek bar 120 by the slider 121 according to the user's operation is also performed.

Furthermore, as the pitching video 110, images of pitches selected randomly in the order of pitching date and time or by user operation among the actual pitches meeting the conditions listed in the pitch table 150 are sequentially displayed. In this case, the data of pitches in the pitch table 150 may be filtered, and pitches may be selected randomly, in the order of the pitching date and time, or by user selection among extracted pitches.

Meanwhile, Fig. 16 illustrates an example of the pitching video 110 from the viewpoint of the umpire, and the setting of the item selection unit 102 is strike/ball judgment.

In this case, the answer button 160 is a button for selecting "strike" or "ball".

With such a training screen 100, an umpire or an umpire trainee can practice the judgment.

Note that, in the case of umpire training, the pointer 124 for temporarily stopping the pitching video 110 is set at, for example, a position behind the home plate. Alternatively, the user may be requested to select "strike" or "ball" after continuing until the end of pitching without a temporary stop.

That is, it is preferable that the presence or absence of the stop of the pitching video 110, the timing of the stop, and the timing of requesting the answer input are different according to the training item.

Furthermore, in a case where the training item is strike/ball judgment, not only umpire training but also batter training can be performed.

For example, the viewpoint is set to a right-handed batter or a left-handed batter, and the pitching video 110 of the batter's viewpoint is displayed. The pointer 124 is, for example, a timing of a pitch tunnel.

Then, the pitching video 110 is reproduced and stopped at the timing of the pointer 124 to request the user to select "strike" or "ball". The user selects "strike" or "ball" from the viewpoint of a batter at the timing of determining whether or not to swing. Thus, it is possible to implement training for the batter to improve the selection eyes.

In the training for answering these "strike" and "ball", the correct/incorrect determination performed by the calculation unit 21 in step S261 includes two types of processing of the following [Example 3] and [Example 4], and may be performed in either case, or the user may select either one.

### [Example 3]

With reference to the information of the trajectory of the ball based on the EPTS data, the strike zone is set based on the batter's skeleton and the home base position, and the strike or ball is determined based on whether or not the trajectory of the ball passes through the strike zone. The determination result is compared with the user's answer as a correct answer.

### [Example 4]

The judgment in the actual game left in the score data SD is compared with the user's answer as a correct answer. However, the correct answer is determined in the above [Example 3] for the pitching in which the strike/ball judgment is not made by the striking. Alternatively, such pitching may not be used as a sample (not listed on the pitch table 150).

Furthermore, in consideration of such training of the strike/ball judgment, the name of the umpire can be set as a setting item, and the pitching in the case of a specific umpire may be listed in the pitch table 150.

In that case, the actual judgement is taken as a correct answer as in [Example 4].

In this way, it is possible to implement training in which the habit of the judgement of a specific umpire can be perceived. For example, it is a practice for each individual umpire to determine a tendency to widen the strike zone at the outer angle, a tendency to narrow the strike zone as a whole, and the like.

Moreover, as the training item, an item of judgment of pitching/pickoff ball for practice of stealing bases is also conceivable.

The viewpoint of the pitching video 110 is set to the first base, the second base, or the like. The samples listed in the pitch table 150 include not only pitching to a batter but also a pickoff ball.

The answer button 160 is a button for selecting "pitch" or "pickoff ball".

With such a training screen 100, it is possible to perform training for determining a habit of a pickoff ball of a pitcher from the viewpoint of a runner.

### <4. Summary and Modification>

According to the above-described embodiments, the following effects can be obtained.

The information processing device 70 functioning as the server device 2 according to the embodiment includes a calculation unit 21 that performs processing of generating motion tendency information indicating a motion tendency with respect to a specific motion that is a human action, for example, a pitching motion.

Thus, for example, it is possible to obtain information indicating a habit of a pitcher when throwing a ball, for example, a difference in motion between when throwing a fast ball and when throwing a breaking ball, and the information can be used for research of pitching of a pitcher, practice of a batter for pitching, and the like.

In the embodiment, an example has been described in which the calculation unit 21 generates the motion tendency information on the basis of capture data such as skeleton capture data obtained from a captured image of the specific motion.

For example, the calculation unit 21 generates an AI model to which a large number of EPTS data of pitching motions of a certain pitcher are input and that has learned the motion tendency. The skeleton capture data makes the movement of the body in the process of the pitching motion clear, and is suitable for learning the motion tendency.

Note that the capture data includes expression capture data and item capture data as described above, and a feature of a process of a pitching motion is clarified by generating the motion tendency information on the basis of the expression capture data and the item capture data, which is suitable for learning the motion tendency.

In the embodiment, an example has been described in which the calculation unit 21 performs processing of generating display information based on the motion tendency information.

For example, the calculation unit 21 generates display information from information obtained from an AI model that has learned a motion tendency of a certain pitcher, and displays the tendency presentation screen 30 in Fig. 4 and the like. With this display, it is possible to provide the user with appropriate information for determining a habit of pitching or the like.

In the embodiment, an example has been described in which the calculation unit 21 generates display information indicating an importance level of a feature amount used for motion result prediction of the specific motion as display information based on the motion tendency information.

For example, the important motion model 64, the feature amount graph 66, and the like indicating the attention point 65 that is determined from the AI model of the pitcher and may be a habit of motion are displayed. Thus, a body part motion that is highly likely to be determined as a habit of pitching motion is indicated, and the information contributing to discrimination of a habit of a pitcher can be presented to the user.

In the embodiment, an example has been described in which the calculation unit 21 generates display information indicating prediction accuracy of motion result prediction of the specific motion as display information based on the motion tendency information.

For example, the prediction accuracy 61 of a ball type by the AI model of a certain pitcher, the time-series change graph 62 indicating a change in prediction accuracy, the accuracy for each situation 67, and the like are displayed. The level of prediction accuracy from a pitching form is an index of whether or not a habit can be found from the pitching form. For example, the value indicated by the prediction accuracy 61 is a low value in the case of a pitcher having no form habit for each ball type, and a value indicated by the prediction accuracy 61 is a high value in the case of a pitcher having a form habit for each ball type. Therefore, the information of prediction accuracy is also an index of whether or not a habit can be found by the important motion model 64 and the feature amount graph 66.

In the embodiment, an example has been described in which the calculation unit 21 generates a motion comparison image indicating a motion for each of motion results of the specific motion as display information based on the motion tendency information.

For example, the motion comparison display unit 50 displays motion comparison images (the bone models 51 and 52 or the CG models 53 and 54) indicating motions in respective cases of a fast ball and a breaking ball as results of the motions. Thus, the user can intuitively understand a difference in pitching form depending on the ball type.

In the embodiment, an example has been described in which the motion comparison image is set as an image in which a difference point caused in a motion for each of motion results is highlighted.

For example, a specific portion is clearly indicated as the highlight 55 in the motion comparison display unit 50. Thus, the user can easily find a difference in pitching form depending on the ball type.

In the embodiment, an example has been described in which the calculation unit 21 performs processing of generating display information on the basis of the motion tendency information in which a feature amount of a motion observable in a state of being viewed from a specific viewpoint position has been learned.

For example, the calculation unit 21 sets a viewpoint position of, for example, a right-handed batter as a motion of a certain pitcher, and generates display information of the tendency presentation screen 30 using the AI model that has learned a feature amount of a motion observable from the viewpoint of the right-handed batter. Thus, the tendency presentation screen 30 suitable for each viewpoint can be presented in consideration of differences in viewpoints of a right-handed batter, a left-handed batter, a runner, an umpire, and the like.

In the embodiment, an example has been described in which the calculation unit 21 performs processing of generating display information on the basis of the motion tendency information in which a feature amount of a motion observable in a part of a motion period of the specific motion has been learned.

For example, the calculation unit 21 divides the period from the start to immediately after the release into phases 0 to 3 as a pitching motion of a certain pitcher, and generates display information of the tendency presentation screen 30 using, for example, an AI model in which a feature amount of a motion observable in a designated period up to phase 1. Thus, the tendency presentation screen 30 focusing only on the motion observed in a part of the period of the specific motion can be presented. For example, in the case of pitching, the display can be made in consideration of a period during which a batter can actually observe.

In the embodiment, an example has been described in which the calculation unit 21 performs processing of generating display information including a moving image of the specific motion and an operator with which a motion result of the specific motion indicated in the moving image is answered.

For example, the calculation unit 21 performs processing of displaying the training screen 100 including the pitching video 110 and the answer button 160. By allowing the ball type to be answered while displaying a moving image of a pitching motion on such a training screen 100, perception training of the pitch prediction can be performed. In particular, it is very useful to grasp the presence or absence of a habit of a pitcher and an important movement on the tendency presentation screen 30 and then actually perform the perceptual training on the training screen 100 as a countermeasure against an opposing pitcher of the team.

In particular, after determining the habit of the pitcher on the tendency presentation screen 30, the user can perform training for predicting the ball type with a CG image of the pitcher on the training screen 100, and thus it is possible to provide an effective preparation environment for a game to the user.

In the embodiment, an example has been described in which the pitching video 110 is generated on the basis of capture data obtained from a captured image of a past actual specific motion.

For example, the calculation unit 21 stores skeleton capture data for each ball for a past pitch of a certain pitcher, and generates the pitching video 110 as a CG image based on the skeleton capture data. Thus, it is possible to display the pitching video 110 corresponding to the actual pitching of a specific pitcher, which is suitable for training.

Furthermore, the pitching video 100 may be generated on the basis of not only the skeleton capture data but also the expression capture data, the item capture data, and the like. This is effective for displaying the pitching video 110 corresponding to the actual pitching.

In the embodiment, an example has been described in which control is performed to temporarily stop the pitching video 110 at a determination timing after start of playback, and resume playback in accordance with an answer of a motion result.

That is, the pitching video 110 is temporarily stopped at the determination timing indicated by the pointer 124 (for example, the timing of the pitch tunnel), and the user can answer with the answer button 160. Then, after the answer, the playback is resumed. This is suitable for training in which the ball type is determined by the pitching form until the determination timing.

Furthermore, an appropriate answer timing can be set by changing the timing of pausing the playback according to the purpose of training.

In the embodiment, an example has been described in which the calculation unit 21 sets the determination timing on the basis of a user input.

For example, the calculation unit 21 changes the pause timing by the user arbitrarily moving the pointer 124. This allows the user to designate the determination timing. For example, it is possible to adjust the difficulty level of training by changing a determination timing to an earlier stage.

In the embodiment, the example has been described in which the calculation unit 21 generates the pitching video 110 as the moving image of the pitching motion observed from a designated viewpoint position.

The viewpoint position can be designated as a right-handed batter, a left-handed batter, a runner on first base, an umpire, and the like, and by generating the pitching video 110 with the designated viewpoint position, the displayed pitching video 110 can be made suitable for the purpose of training. That is, the user can receive training at a viewpoint position in an actual game of the user. For example, it is possible to display a moving image suitable for each of prediction training of a ball type from the viewpoint of a right-handed batter, prediction training of whether it is a pitch or a pickoff ball from the viewpoint of a runner, determination training of whether it is a strike or a ball from the viewpoint of an umpire, and the like.

In the embodiment, an example has been described in which the calculation unit 21 performs processing of generating and displaying the pitching video 110 by using data of a specific motion randomly selected among data of a plurality of past specific motions extracted under a designated condition.

For example, search is performed using a pitcher name, a period/date and time, or the like as a condition, a pitch table 150 of a search result is obtained, and pitching is randomly selected from the pitch table to generate a pitching video 110. Thus, the pitching video 110 as a training problem can be displayed in a state where the user cannot predict the past actual pitching.

In the embodiment, an example has been described in which the calculation unit 21 performs processing of displaying a correct or incorrect result of an answer of a motion result of the specific motion.

By displaying the correct or incorrect result of the answer, the user can know how much the user's own determination ability is.

Note that the determination of correct or incorrect answer may be based on the type of ball actually thrown in the past pitching or the determination of strike or ball by an actual umpire, or may be determined from data. For example, the type of ball thrown or strike/ball may be determined from the trajectory of the ball. These can be used differently depending on the purpose of training.

In the embodiment, the specific motion is a pitching motion of baseball or softball.

The motion tendency information about the pitching motion is generated and the tendency presentation screen 30 is displayed on the basis of the motion tendency information, or the CG moving image of the pitching motion is generated and used as the pitching video 110 of the training screen 100, which is suitable for assisting or training prediction of a pitching motion of a batter, a runner, and an umpire.

Note that an operation other than the pitching motion of baseball or softball may be set as the specific operation of the present technology.

For example, the present invention may be applied to bat swing of baseball or softball. By analyzing a bat-swing of a certain batter and presenting a feature amount, an important movement, and the like, for example, it is possible to use the analysis for finding a difference in swing and the like between a good condition, a swing, and a bad condition.

Moreover, by setting an action of another competition and a penalty kick of soccer as a specific motion, it is effective for providing information such as a habit of a kicker for predicting a shooting direction by a goalkeeper and prediction training of a goalkeeper. Further, for example, an operation such as serving in tennis, volleyball, or table tennis may be used as the specific operation.

Furthermore, the present invention is not limited to sports, and can also be applied to training of result prediction and prediction of specific motions such as play motion and daily motion.

The processing related to the tendency presentation screen 30 and the processing related to the training screen 100 described in the embodiment are mainly performed by the control of the server device 2, but may be executed by the CPU 71 on the terminal device 5 side by an application program defining these processing.

A program according to the embodiment is a program for causing, for example, a CPU, a digital signal processor (DSP), an AI processor, and the like, or the information processing device 70 including the CPU, the DSP, or the AI processor, to perform the processing illustrated in Figs. 10, 11, 17, and 18.

That is, the program according to the embodiment is a program that causes the information processing device 70 to execute processing of generating motion tendency information indicating a motion tendency with respect to a specific motion that is a human action.

With such a program, the information processing device 70 constituting the information analysis system 1 according to the embodiment can be achieved in, for example, a computer device, a mobile terminal device, or another device capable of performing information processing.

Such a program can be recorded in advance in an HDD as a recording medium built in a device such as a computer device and the like, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program may be installed from the removable recording medium into a personal computer and the like, or may be downloaded from a download site through a network such as a local area network (LAN) or the Internet.

Furthermore, such a program is suitable for providing the information processing device 70 included in the information analysis system 1 according to the embodiment in a wide range. For example, the program is downloaded to a mobile terminal device such as a smartphone, a tablet, and the like, an imaging device, a mobile phone, a personal computer, a game device, a video device, a personal digital assistant (PDA), and the like, and thus the smartphone and the like can be caused to function as the information processing device 70 constituting the information analysis system 1 of the present disclosure.

Note that, the effects described in the present specification are merely examples and are not limited, and other effects may be provided.

Note that the present technology can also have the following configurations.
(1) An information processing device including a calculation unit that performs processing of generating motion tendency information indicating a motion tendency with respect to a specific motion that is a human action.
(2) The information processing device according to (1) above, in which the calculation unit generates the motion tendency information on the basis of capture data obtained from a captured image of the specific motion.
(3) The information processing device according to (1) or (2) above, in which the calculation unit performs processing of generating display information based on the motion tendency information.
(4) The information processing device according to (3) above, in which the calculation unit generates display information indicating an importance level of a feature amount used for motion result prediction of the specific motion as display information based on the motion tendency information.
(5) The information processing device according to (3) or (4) above, in which the calculation unit generates display information indicating prediction accuracy of motion result prediction of the specific motion as display information based on the motion tendency information.
(6) The information processing device according to any one of (3) to (5) above, in which the calculation unit generates a motion comparison image indicating a motion for each of motion results of the specific motion as display information based on the motion tendency information.
(7) The information processing device according to (6) above, in which the calculation unit sets the motion comparison image as an image in which a difference point caused in a motion for each of motion results is highlighted.
(8) The information processing device according to any one of (1) to (7) above, in which the calculation unit performs processing of generating display information on the basis of the motion tendency information in which a feature amount of a motion observable in a state of being viewed from a specific viewpoint position has been learned.
(9) The information processing device according to any one of (1) to (8) above, in which the calculation unit performs processing of generating display information on the basis of the motion tendency information in which a feature amount of a motion observable in a part of a motion period of the specific motion has been learned.
(10) The information processing device according to any one of (1) to (9) above, in which the calculation unit performs processing of generating display information including a moving image of the specific motion and an operator with which a motion result of the specific motion indicated in the moving image is answered.
(11) The information processing device according to (10) above, in which the calculation unit generates the moving image on the basis of capture data obtained from a captured image of a past actual specific motion.
(12) The information processing device according to (10) or (11) above, in which the calculation unit performs control to temporarily stop the moving image at a determination timing after start of playback, and resume playback in accordance with an answer of a motion result.
(13) The information processing device according to (12) above, in which the calculation unit sets the determination timing on the basis of a user input.
(14) The information processing device according to any one of (10) to (13) above, in which the calculation unit generates the moving image as a moving image obtained by observing the specific motion from a designated viewpoint position.
(15) The information processing device according to any one of (10) to (14) above, in which the calculation unit performs processing of generating and displaying the moving image by using data randomly selected from among data of a plurality of the past specific motions extracted under a designated condition.
(16) The information processing device according to any one of (10) to (15) above, in which the calculation unit performs processing of displaying a correct or incorrect result of an answer of a motion result of the specific motion.
(17) The information processing device according to any one of (1) to (16) above, in which the calculation unit generates the motion tendency information on the basis of skeleton capture data obtained from a captured image of the specific motion.
(18) The information processing device according to any one of (1) to (17) above, in which the specific motion is a pitching motion of baseball or softball.
(19) An information processing method including executing, by an information processing device, processing of generating motion tendency information indicating a motion tendency with respect to a specific motion that is a human action.
(20) An information analysis system including:
   an imaging device;
   a data generation unit that generates capture data from an image captured by the imaging device with respect to a specific motion that is a human action; and
   a calculation unit that generates motion tendency information indicating a motion tendency with respect to the specific motion on the basis of the capture data generated by the data generation unit.

### REFERENCE SIGNS LIST

- 1: Information analysis system
- 2: Server device
- 3: Score data server
- 4: Sensor
- 5: Terminal device
- 10: Imaging device
- 12: EPTS data generation unit
- 21: Calculation unit
- 21a: Drawing processing unit
- 21b: Capture data processing unit
- 21c: Score data processing unit
- 21d: Analysis processing unit
- 22: Presentation control unit
- 23: Storage control unit
- 30: Tendency presentation screen
- 70: Information processing device
- 71: CPU
- 100: Training screen

## Claims

1. An information processing device comprising a calculation unit that performs processing of generating motion tendency information indicating a motion tendency with respect to a specific motion that is a human action.

2. The information processing device according to claim 1, wherein the calculation unit generates the motion tendency information on a basis of capture data obtained from a captured image of the specific motion.

3. The information processing device according to claim 1, wherein the calculation unit performs processing of generating display information based on the motion tendency information.

4. The information processing device according to claim 3, wherein the calculation unit generates display information indicating an importance level of a feature amount used for motion result prediction of the specific motion as display information based on the motion tendency information.

5. The information processing device according to claim 3, wherein the calculation unit generates display information indicating prediction accuracy of motion result prediction of the specific motion as display information based on the motion tendency information.

6. The information processing device according to claim 3, wherein the calculation unit generates a motion comparison image indicating a motion for each of motion results of the specific motion as display information based on the motion tendency information.

7. The information processing device according to claim 6, wherein the calculation unit sets the motion comparison image as an image in which a difference point caused in a motion for each of motion results is highlighted.

8. The information processing device according to claim 1, wherein the calculation unit performs processing of generating display information on a basis of the motion tendency information in which a feature amount of a motion observable in a state of being viewed from a specific viewpoint position has been learned.

9. The information processing device according to claim 1, wherein the calculation unit performs processing of generating display information on a basis of the motion tendency information in which a feature amount of a motion observable in a part of a motion period of the specific motion has been learned.

10. The information processing device according to claim 1, wherein the calculation unit performs processing of generating display information including a moving image of the specific motion and an operator with which a motion result of the specific motion indicated in the moving image is answered.

11. The information processing device according to claim 10, wherein the calculation unit generates the moving image on a basis of capture data obtained from a captured image of a past actual specific motion.

12. The information processing device according to claim 10, wherein the calculation unit performs control to temporarily stop the moving image at a determination timing after start of playback, and resume playback in accordance with an answer of a motion result.

13. The information processing device according to claim 12, wherein the calculation unit sets the determination timing on a basis of a user input.

14. The information processing device according to claim 10, wherein the calculation unit generates the moving image as a moving image obtained by observing the specific motion from a designated viewpoint position.

15. The information processing device according to claim 10, wherein the calculation unit performs processing of generating and displaying the moving image by using data randomly selected from among data of a plurality of the past specific motions extracted under a designated condition.

16. The information processing device according to claim 10, wherein the calculation unit performs processing of displaying a correct or incorrect result of an answer of a motion result of the specific motion.

17. The information processing device according to claim 1, wherein the calculation unit generates the motion tendency information on a basis of skeleton capture data obtained from a captured image of the specific motion.

18. The information processing device according to claim 1, wherein the specific motion is a pitching motion of baseball or softball.

19. An information processing method comprising executing, by an information processing device, processing of generating motion tendency information indicating a motion tendency with respect to a specific motion that is a human action.

20. An information analysis system comprising:
an imaging device;
a data generation unit that generates capture data from an image captured by the imaging device with respect to a specific motion that is a human action; and
a calculation unit that generates motion tendency information indicating a motion tendency with respect to the specific motion on a basis of the capture data generated by the data generation unit.
